# EUROPEAN PATENT APPLICATION

(11) **EP 4 790 667 A1**
(43) Date of publication of application: **12.08.2026**
(21) Application number: 24874538.2
(22) Date of filing: 26.09.2024
(51) Int. Cl.: G06V 30/14, H04N 1/387

(54) **IMAGE PROCESSING DEVICE**

(30) Priority: 05.10.2023 JP 2023173901; 05.10.2023 JP 2023173902; 05.10.2023 JP 2023173903; 05.10.2023 JP 2023173904
(71) Applicant: KYOCERA Document Solutions Inc., Osaka-shi, Osaka 540-8585 (JP)
(72) Inventor: HAYASHI, Issei, Osaka-shi, Osaka 540-8585 (JP); TANAKA, Kazunori, Osaka-shi, Osaka 540-8585 (JP); SATO, Koji, Osaka-shi, Osaka 540-8585 (JP); OKUI, Ryota, Osaka-shi, Osaka 540-8585 (JP); MIYAJI, Naoya, Osaka-shi, Osaka 540-8585 (JP); OKAZAKI, Yuya, Osaka-shi, Osaka 540-8585 (JP); MURASHIMA, Takanori, Osaka-shi, Osaka 540-8585 (JP); TAJIMA, Shinichi, Osaka-shi, Osaka 540-8585 (JP)
(74) Representative: Winter, Brandl - Partnerschaft mbB
(86) International application number: PCT/JP2024/034353
(87) International publication number: WO 2025/074933

(57) **Abstract**

The target image acquiring unit 11 acquires a document image of a document. The additional object detecting unit 12 (a) detects additional objects additionally described to the document, (b) determines an additionally-written command and a process-target-area specifying command included in the detected additional objects, and (c) determines the process-target-area specifying command corresponding to the additionally-written command. The process type determining unit 13 determines a process type corresponding to the determined additionally-written command among predetermined plural process types. The process executing unit 14 executes a process of the process type corresponding to the determined additionally-written command for a process target area specified by the process-target-area specifying command corresponding to the additionally-written command.

## Description

### Technical Field

The present invention relates to an image processing apparatus.

### Background Art

Regarding a document image obtained by scanning a document that includes a process list of process items "Delete", "Acquire" and "Restrict", an image processing apparatus determines a process item specified with a specific color in the process list, and performs the specified process item for a part surrounded by the specific color or a part filled in with the specific color in the document image (see PATENT LITERATURE #1, for example).

### Citation list

### Patent literature

PATENT LITERATURE #1: Japan Patent Application Publication No. 2009-27243.

### Summary of invention

### Technical problem

However, in the aforementioned image processing apparatus, the aforementioned process list is required to have been included in a document as a process target. A user is required to include the process list in the document when making the document or to additionally print the process list on the document after making the document. If the process list is included in the document when making the document, it is not favorable because an object that does not relate to contents of the original document is printed in the document. Further, if the process list is additionally printed on the document after making the document, it is required to perform this printing and thereafter specify a process with a marker, and therefore a user is required some burden and it is not realistic.

The present invention has been conceived in view of the aforementioned problem, and it is an object of the present invention to obtain an image processing apparatus that a user causes to execute a desired process for a desired part in a document by an intuitive operation even though information on a process is not included when the document is generated as a process target.

### Solution to problem

An image processing apparatus according to the present invention includes: a target image acquiring unit that acquires a document image of a document; an additional object detecting unit that (a) detects additional objects additionally described to the document, (b) determines an additionally-written command and a process-target-area specifying command included in the detected additional objects, and (c) determines the process-target-area specifying command corresponding to the additionally-written command; a process type determining unit that determines a process type corresponding to the determined additionally-written command among predetermined plural process types; and a process executing unit that uses this image processing apparatus or an external server and thereby executes a process of the process type corresponding to the determined additionally-written command for a process target area specified by the process-target-area specifying command corresponding to the additionally-written command.

### Advantageous effect of invention

By means of the present invention, obtained is an image processing apparatus that a user can cause to execute a desired process for a desired part in a document by an intuitive operation even though information on a process is not included when the document is generated as a process target.

These and other objects, features and advantages of the present invention will become more apparent upon reading of the following detailed description along with the accompanied drawings.

### Brief description of drawings

[Fig. 1] Fig. 1 shows a block diagram that indicates a configuration of an image processing apparatus according to an embodiment of the present invention.
[Fig. 2] Fig. 2 shows a diagram that indicates an example of a document and an example of an additionally-written command and an ROI command as additional objects additionally described to the document.
[Fig. 3] Fig. 3 shows a diagram that explains association between a detected additionally-written command and a detected ROI command.
[Fig. 4] Fig. 4 shows a diagram that explains an example of a case that plural process target areas are specified by process-target-area specifying commands.
[Fig. 5] Fig. 5 shows a diagram that explains making association between a first command and a second command in a case that plural process target areas are specified by process-target-area specifying commands (1/2).
[Fig. 6] Fig. 6 shows a diagram that explains another example of a case that plural process target areas are specified by process-target-area specifying commands.
[Fig. 7] Fig. 7 shows a diagram that explains making association between a first command and a second command in a case that plural process target areas are specified by process-target-area specifying commands (2/2).
[Fig. 8] Fig. 8 shows a diagram that indicates an example of a case that there are plural additionally-written commands at substantially same distances from a center position of a process target area.
[Fig. 9] Fig. 9 shows a diagram that indicates an example of an editing screen.
[Fig. 10] Fig. 10 shows a flowchart that explains a behavior of the image processing apparatus shown in Fig. 1.
[Fig. 11] Fig. 11 shows a block diagram that indicates a configuration of an image processing apparatus according to Embodiment 2 of the present invention.
[Fig. 12] Fig. 12 shows a diagram that indicates an example of a document that an additionally-written command has been written.
[Fig. 13] Fig. 13 shows a diagram that indicates a display example of a list of registered rules.
[Fig. 14] Fig. 14 shows a diagram that indicates an example of preview display of another document image that additionally-written commands 111-1 and 111-2 and ROI commands 112-1 and 112-2 have been added on the basis of the rule.
[Fig. 15] Fig. 15 shows a diagram that indicates an example of another document.
[Fig. 16] Fig. 16 shows a diagram that indicates an example of preview display (initial status) of a document image of the document shown in Fig. 15.
[Fig. 17] Fig. 17 shows a diagram that indicates an example of preview display (after editing) of a document image of the document shown in Fig. 15.
[Fig. 18] Fig. 18 shows a diagram that indicates a display example of a list in which a new rule has been added.
[Fig. 19] Fig. 19 shows a diagram that indicates an example of a rule registration screen.
[Fig. 20] Fig. 20 shows a diagram that indicates an example of an additionally-written-command suggestion list.
[Fig. 21] Fig. 21 shows a diagram that indicates an example of preview display (after changing an additionally-written command) of a document image of the document shown in Fig. 12.
[Fig. 22] Fig. 22 shows a flow chart that explains a behavior of the image processing apparatus in Embodiment 2.
[Fig. 23] Fig. 23 shows a diagram that explains association between a detected additionally-written command and a detected ROI command in Embodiment 3.
[Fig. 24] Fig. 24 shows a diagram that explains an example of a case that plural process target areas are specified together with plural additionally-written commands.
[Fig. 25] Fig. 25 shows a diagram that explains an example of a case that plural process target areas are specified together with a single additionally-written command.
[Fig. 26] Fig. 26 shows a diagram that explains an example of a case that plural additionally-written commands are specified to a single process target area (a pair of process-target-area specifying commands).
[Fig. 27] Fig. 27 shows a diagram that indicates examples of an argument command.
[Fig. 28] Fig. 28 shows a flow chart that explains a behavior of the image processing apparatus in Embodiment 3.
[Fig. 29] Fig. 29 shows a diagram that indicates an example of a document in Embodiment 4.
[Fig. 30] Fig. 30 shows a diagram that indicates an example of a structured data generation process corresponding to the additionally-written command "TABLE".
[Fig. 31] Fig. 31 shows a diagram that indicates an example of a data addition process.
[Fig. 32] Fig. 32 shows a diagram that indicates an example of an argument command for the additionally-written command "TABLE".
[Fig. 33] Fig. 33 shows a diagram that indicates an example of an argument command for the additionally-written command "CSV".
[Fig. 34] Fig. 34 shows a diagram that indicates an example of a process that generates a single piece of structured data from plural document images.
[Fig. 35] Fig. 35 shows a flow chart that explains a behavior of the image processing apparatus in Embodiment 4.
[Fig. 36] Fig. 36 shows a flowchart that explains details of the process execution in Fig. 35.

### Description of embodiments

Hereinafter, embodiments according to aspects of the present invention will be explained with reference to a drawing.

### Embodiment 1.

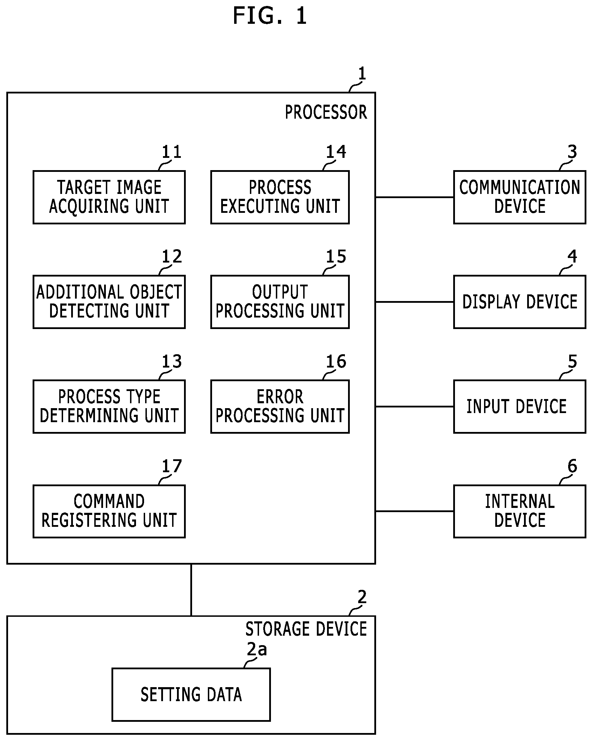

Fig. 1 shows a block diagram that indicates a configuration of an image processing apparatus according to an embodiment of the present invention. An image processing apparatus shown in Fig. 1 is an information processing apparatus such as personal computer, or an electronic apparatus such as digital camera or image forming apparatus (scanner, multi function peripheral or the like), and includes a processor 1, a storage device 2, a communication device 3, a display device 4, an input device 5, an internal device 6 and the like.

The processor 1 includes a computer and executes a program with the computer and thereby, acts as sorts of processing units. Specifically, the computer includes a CPU (Central Processing Unit), a ROM (Read Only Memory), a RAM (Random Access Memory) and the like, loads a program stored in the ROM or the storage device 2, executes the program with the CPU, and thereby acts as sorts of processing units. Further, the processor 1 may include an ASIC (Application Specific Integrated Circuit) that acts as a specific processing unit.

The storage device 2 is a non-volatile storage device such as flash memory, and stores a program and data required for a process mentioned below. In the storage device 2, setting data 2a is stored. The setting data 2a includes a parameter of a learner mentioned below and a relationship between an additionally-written command and a command type, and the like.

The communication device 3 is a device that performs data communication with an external device, such as network interface or a peripheral device interface. The display device 4 is a device that displays sorts of information to a user, such as a display panel of a liquid crystal display. The input device 5 is a device that detects a user operation, such as keyboard or touch panel.

The internal device 6 is a device that performs a specific function of this image processing apparatus. For example, if this image processing apparatus is an image forming apparatus, the internal device 6 includes an image scanning device that optically scans a document image from a document, a printing device that prints an image on a print sheet, and/or the like.

Here, the processor 1 acts as a target image acquiring unit 11, an additional object detecting unit 12, a process type determining unit 13, a process executing unit 14, an output processing unit 15, an error processing unit 16, and a command registering unit 17 as the aforementioned processing units.

The target image acquiring unit 11 acquires a document image (i.e. image data of it) of a document from the storage device 2, the communication device 3, the internal device 6 or the like, and stores the document image into the RAM or the like. For example, this document is a print product outputted by a printing device, and this document image is an image obtained by scanning such document using an image scanning device. For example, this document is a business form.

The additional object detecting unit 12 (a) detects additional objects additionally described to the aforementioned document, (b) determines an additionally-written command and a process-target-area specifying command (ROI commands mentioned below) included in the detected additional objects, and (c) determines the process-target-area specifying command (i.e. a corresponding process target area) corresponding to the additionally-written command.

The additional object detecting unit 12 may detect additional objects additionally described to the aforementioned document in the document image that includes the aforementioned additional objects or may detect additional objects additionally described to the aforementioned document in a difference image between the document image that includes the aforementioned additional objects and an original document image that does not include the aforementioned additional objects. Further, if an original document image is a monochrome image and additional objects are added by handwriting with a color writing tool such as a pen, the additional objects may be detected by extracting parts with a writing color (chromatic color) of the writing tool from the document image that includes the aforementioned additional objects. For example, the writing color is specified as coordinate values with an HSV color space.

The process type determining unit 13 determines a process type corresponding to the determined additionally-written command among predetermined plural process types.

Here, the additionally-written command is image information rather than character information, and image information of at least one of character, symbol and figure.

In this embodiment, the additional object detecting unit 12 and the process type determining unit 13 perform the detection of the additional objects and the determination of the process type by object detection using a learner that machine learning has been performed. This learner is a deep-learning neural network built in this image processing apparatus or the like, and for example, machine learning has been performed for the learner in accordance with an existing machine learning method such that lots of document images in which additionally-written commands and ROI (Region Of Interest) commands have been added are used as input data and classes of the additionally-written commands and the ROI commands are used as output data.

Thus, for extracting the additionally-written command, an OCR (Optical Character Recognition) process is not executed for the additional objects detected by the additional object detecting unit 12, and the additional objects are directly classified into the additionally-written command on the basis of image information (image characteristic amount) of the additional objects, and registered in advance.

As mentioned, the additionally-written command is recognized using object detection, and therefore, even if there is a small error such as misspelling when a user writes the additionally-written command to a document, for example, it tends to be recognized as the additionally-written command intended by the user without referring to a dictionary or the like, and the additionally-written command intended by the user is recognized quickly and correctly.

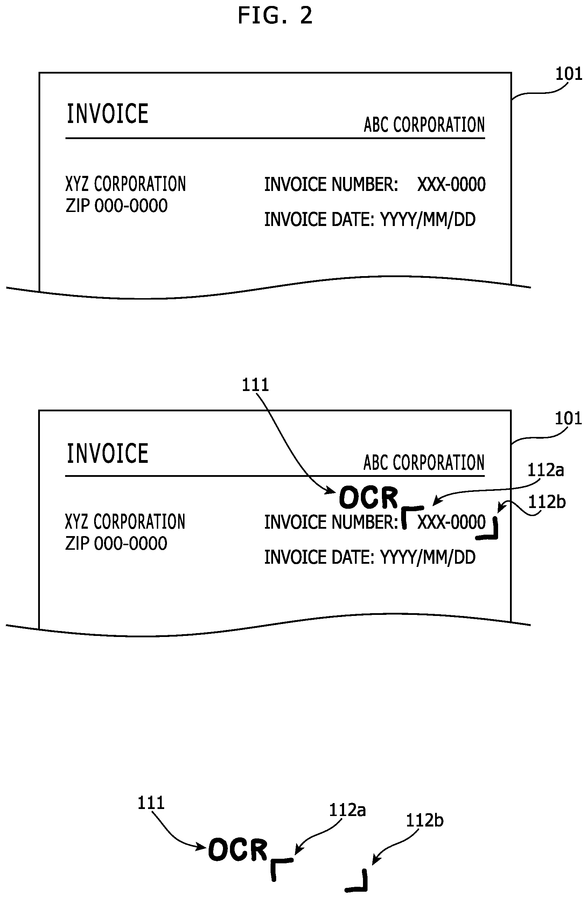

Fig. 2 shows a diagram that indicates an example of a document and an example of an additionally-written command and an ROI command as additional objects additionally described to the document.

For example, an additionally-written command 111 and ROI commands 112a and 112b are additionally written to a document 101 as shown in Fig. 2. For example, this additional writing is performed by handwriting with a writing tool such as marker of a predetermined color. The ROI commands 112a and 112b are process-target-area specifying commands.

The additionally-written command 111 shown in Fig. 2 is "OCR" as characters. Further, the ROI commands 112a and 112b shown in Fig. 2 are a pair of square brackets, and specify a process target area for a process specified by the additionally-written command 111.

In this embodiment, plural process types that can be specified by plural additionally-written commands different from each other are set in the setting data 2a. As the plural process types, there are image insertion, character information extraction, data structuring, image generation and the like.

For example, in the process type "image insertion" corresponding to the additionally-written command "ERASE", executed is a process to overwrite a process target area with a background color (i.e. deletion of an object in a process target area). For example, in the process type "image insertion" corresponding to the additionally-written command "MASK", executed is a process to overwrite a process target area with a specific color (black or the like) (i.e. mask process). For example, in the process type "character information extraction" corresponding to the additionally-written command "OCR", an OCR process for a printed character is executed for an image of a process target area. For example, in the process type "data structuring" corresponding to the additionally-written command "TABLE", executed is a process to perform table extraction for an image of a process target area and save data in the extracted table as CSV data or the like. For example, in the process type "image generation" corresponding to the additionally-written command "@AI", executed is a process to generate an image appropriate to character information (text data) obtained in an OCR process for an image of a process target area using a diffusion model or the like and fit the generated image into the process target area.

Further, the process-target-area specifying command includes a pair of a first command (ROI command 112a) and a second command (ROI command 112b) different from each other. The process target area is a bounding box of the first command (ROI command 112a) and the second command (ROI command 112b) as a pair. Here, the first command (ROI command 112a) is an opening bracket and the second command (ROI command 112b) is a closing bracket.

In the detection of the aforementioned additional objects, bounding boxes (circumscribed rectangles) 121, 122a and 122b of the additional objects are detected; and in the determination of the aforementioned process type, an additional object that has a specific image characteristic is recognized as the additionally-written command 111, and additional objects that have specific image characteristics are recognized as the ROI commands 112a and 112b (a pair of an image that indicates a top left corner of a process target area and an image that indicates a bottom right corner of the process target area).

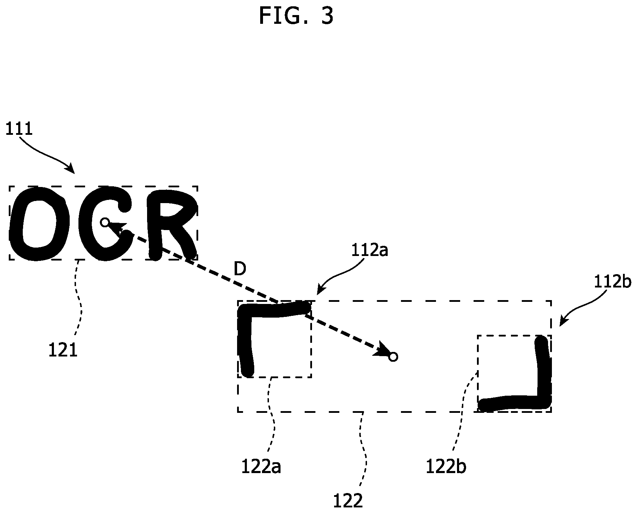

Fig. 3 shows a diagram that explains association between a detected additionally-written command and a detected ROI command. Further, as shown in Fig. 3 for example, the bounding box 122 of the ROI commands 112a and 112b is set as a process target area, and the additionally-written command 111 and the process target area are associated with each other on the basis of a distance D between a centroid position of the bounding box 122 (process target area) and a centroid position of the bounding box 121 of the additionally-written command 111. Therefore, a process specified by the additionally-written command 111 is executed for this process target area. For example, if the distance D is equal to or less than a predetermined value, then the additionally-written command 111 and the process target area are associated with each other.

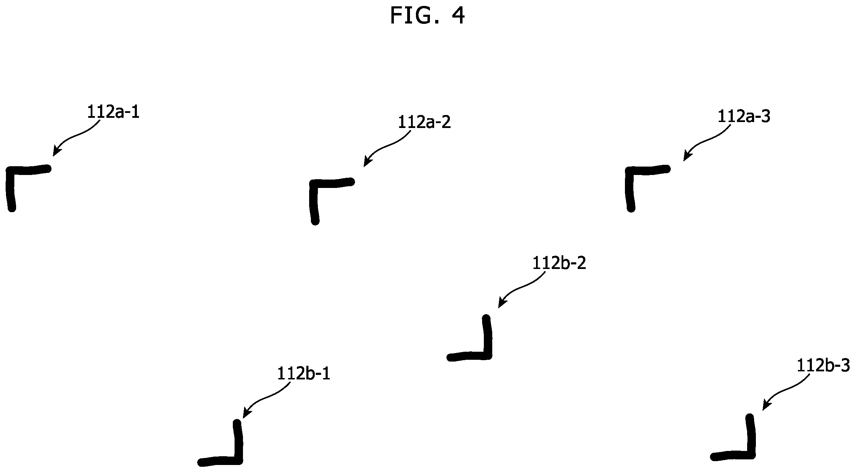

Fig. 4 shows a diagram that explains an example of a case that plural process target areas are specified by process-target-area specifying commands. As shown in Fig. 4 for example, if plural process target areas are specified by plural pairs of ROI commands 112a-1 to 112a-3 and 112b-1 to 112b-3, a process target area that has the shortest distance between a center position of an additionally-written command and a center position of this process target area is determined as a process target area specified by the process-target-area specifying command corresponding to this additionally-written command.

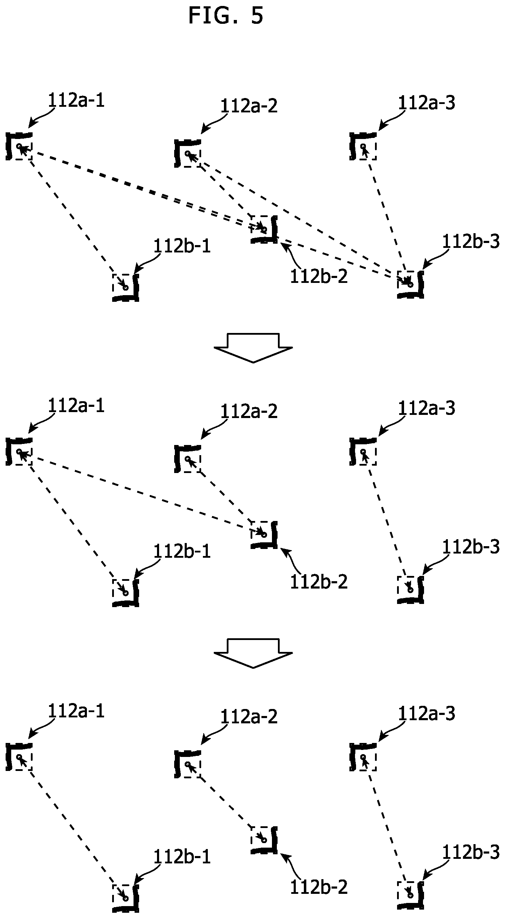

Fig. 5 shows a diagram that explains making association between a first command (ROI command 112a-i) and a second command (ROI command 112b-i) in a case that plural process target areas are specified by process-target-area specifying commands (1/2).

In this embodiment, as shown in Fig. 5 for example, a second command (ROI command 112b-i) that exists in a specific angle range (here, angle range in a positive primary scanning direction and in a positive secondary scanning direction) in a view from a first command (ROI command 112a-i) is set as a second command that makes a pair with this first command.

Further, as shown in Fig. 5 for example, if a single second command (ROI command 112b-i) exists in a specific angle range in a view from the first command (ROI command 112a-i), then this second command (ROI command 112b-i) is set as a second command (ROI command 112b-i) that makes a pair with this first command (ROI command 112a-i). For example, as shown in Fig. 5, a second command that exists in the specific angle range in a view from the ROI command 112a-3 is only the ROI command 112b-3, and therefore, the ROI command 112b-3 is set as a second command that makes a pair with the ROI command 112a-3.

In a case shown in Fig. 5, after a pair of the ROI command 112b-3 and the ROI command 112a-3 is set, an unset second command (i.e. a second command not making a pair) that exists in the specific angle range in a view from the ROI command 112a-2 is only the ROI command 112b-2, and therefore, the ROI command 112b-2 is set as a second command that makes a pair with the ROI command 112a-2. Afterward, an unset second command (i.e. a second command not making a pair) that exists in the specific angle range in a view from the ROI command 112a-1 is only the ROI command 112b-1, and therefore, the ROI command 112b-1 is set as a second command that makes a pair with the ROI command 112a-1.

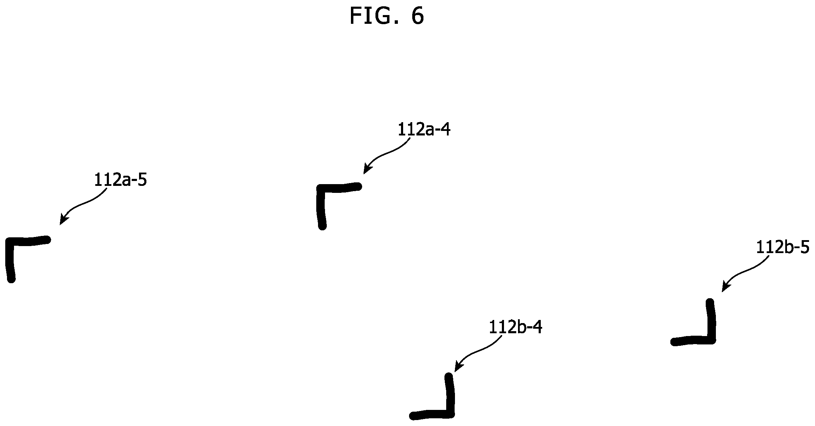

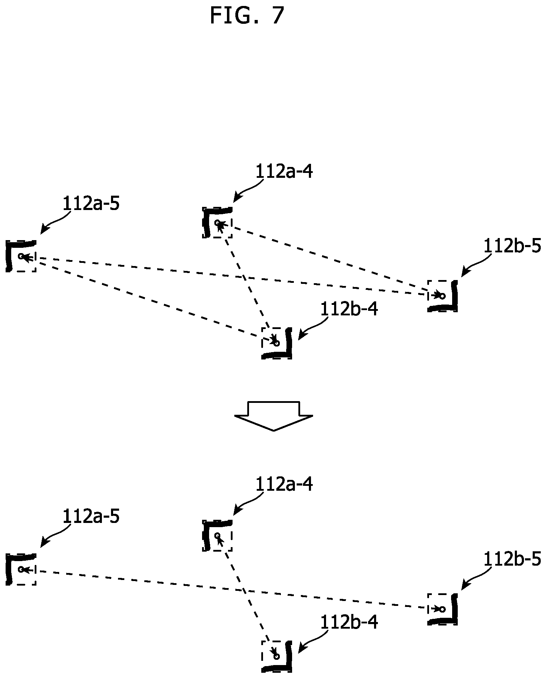

Fig. 6 shows a diagram that explains another example of a case that plural process target areas are specified by process-target-area specifying commands. Fig. 7 shows a diagram that explains making association between a first command (ROI command 112a-i) and a second command (ROI command 112b-i) in a case that plural process target areas are specified by process-target-area specifying commands (2/2).

As shown in Fig. 6 for example, when plural first commands (ROI commands 112a-i) and plural second commands (ROI commands 112b-i) are determined as the process-target-area specifying commands, if plural second commands (ROI commands 112b-i) exist in a specific angle range in a view from the first command (ROI commands 112a-i) (i.e. if there are no first commands (ROI command 112a-i) of which in the specific angle only one second command (ROI commands 112b-i) exists), then among the second commands (ROI commands 112bi), a second command (ROI command 112b-i) that has the shortest distance from the first command (ROI commands 112a-i) is set as a second command (ROI commands 112a-i) that makes a pair with this first command (ROI commands 112a-i).

For example, in a case shown in Fig. 6, as shown in Fig. 7, to the ROI command 112a-4, the ROI commands 112b-4 and 112b-5 exist in the specific angle range. Therefore, among the ROI commands 112b-4 and 112b-5, the ROI commands 112b-4 closer to the ROI commands 112b-4 is set as a second command that makes a pair with the ROI command 112a-4 (first command). Afterward, the ROI command 112b-5 is set as a second command that makes a pair with the ROI command 112a-5 (first command) .

As mentioned, making association between the first commands and the second commands is performed among the process-target-area specifying commands.

Further, if there are plural additionally-written commands at substantially same distances from a center position of a process target area, then the additionally-written command (a center position of it) located in an upper side of (a center position of) the process target area is determined as the additionally-written command corresponding to this process target area.

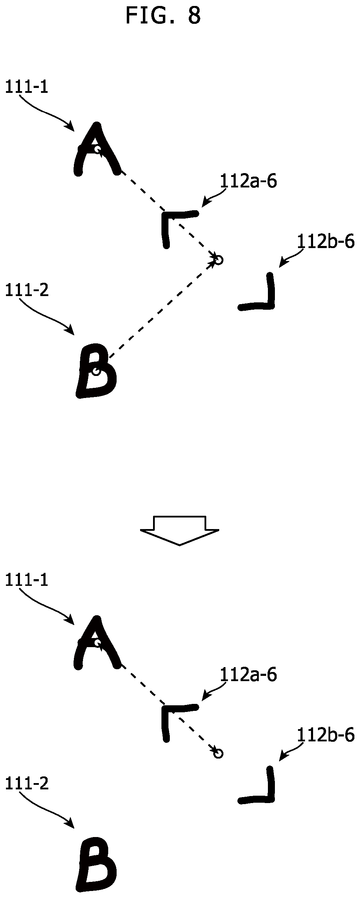

Fig. 8 shows a diagram that indicates an example of a case that there are plural additionally-written commands at substantially same distances from a center position of a process target area. As shown in Fig. 8 for example, there are the additionally-written commands 111-1 and 111-2 at substantially same distances from a center position of a process target area specified by the ROI commands 112a-6 and 112b-6. In this case, the additionally-written commands 111-1 located in an upper side of the process target area is determined as the additionally-written command corresponding to this process target area.

Further, in this embodiment, the additional object detecting unit 12 (a) classifies the additional object into any of predetermined plural commands, and (b) displays a detection result and a classification result of the additional objects on the predetermined display device 4.

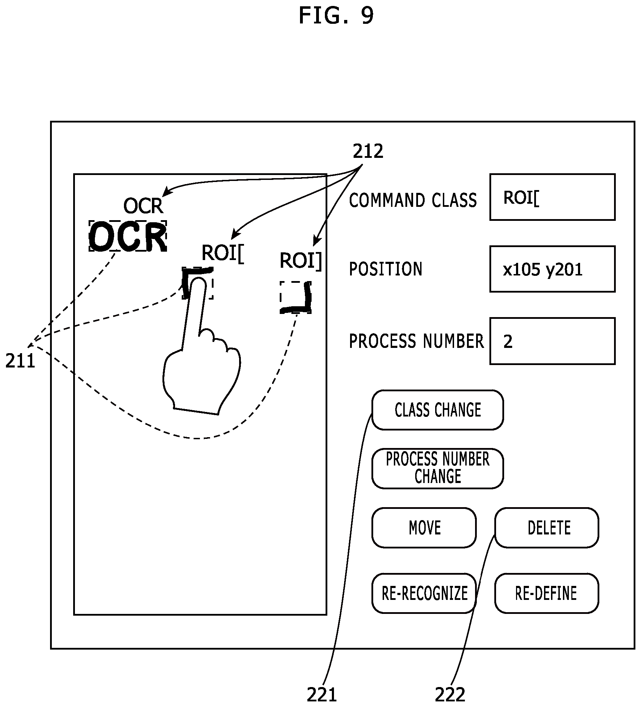

Fig. 9 shows a diagram that indicates an example of an editing screen. The additional object detecting unit 12 displays on the display device 4 an editing screen as shown in Fig. 9, and in the editing screen, displays a detection result and a classification result of the additional object. Here, the detection result of the additional object is indicated with bounding boxes 211, and the classification result (classes 212, i.e. names of additionally-written commands) is displayed with the bounding boxes 211. In a case shown in Fig. 9, three additional objects are detected, and one of them is classified into the additionally-written command (OCR), one of them is classified into the aforementioned first command (ROI[), and one of them is classified into the aforementioned second command (ROI]).

Further, in the editing screen, displayed are a class, a position and a process number of a command selected by a user operation (here, touching operation).

Furthermore, the editing screen includes a class change key 221. The class change key 221 is a soft key to manually change a class of the selected command. When the class change key 221 is pressed down, the additional object detecting unit 12 displays a dialog to change a class of the selected command, and changes the class of the selected command in accordance with a user operation to the dialog.

Furthermore, the editing screen includes a delete key 222. The delete key 222 is a key to cancel the detection of the selected command if the selected command was misdetected. When the delete key 222 is pressed down, the additional object detecting unit 12 deletes the detection result and the classification result of the selected command.

As mentioned, using the graphical user interface, the additional object detecting unit 12 corrects the aforementioned detection result and classification result in accordance with a user operation to the input device 5 (touch panel or the like).

Returning to Fig. 1, the process executing unit 14 uses this image processing apparatus or an external server and thereby executes a process of the process type corresponding to the determined additionally-written command (command ID) for a process target area specified by the process-target-area specifying command corresponding to this additionally-written command. If this process is executed using an external server, the process executing unit 14 transmits a process request and data required for the process to the external server using the communication device 3, and receives a process result from the external server using the communication device 3.

In this embodiment, the process executing unit 14 selects on the basis of the determined process type either to execute the process using this image processing apparatus or to execute the process using the external server. Specifically, for a high-load process, the process executing unit 14 causes the external server to execute the process; and for a low-load process, the process executing unit 14 executes the process with this image processing apparatus without using the external server.

The output processing unit 15 performs outputting the aforementioned processed document image (printing, data transmission or the like), outputting the data obtained by the aforementioned process, displaying a result of the aforementioned process on the display device 4 or the like. If an error occurs in the aforementioned detection of the additional objects and the determination of the process type, then the error processing unit 16 determines a cause and/or an error type of the error and displays the cause and/or the error type on the display device 4. The command registering unit 17 performs registration of a user-desired additionally-written command and the like.

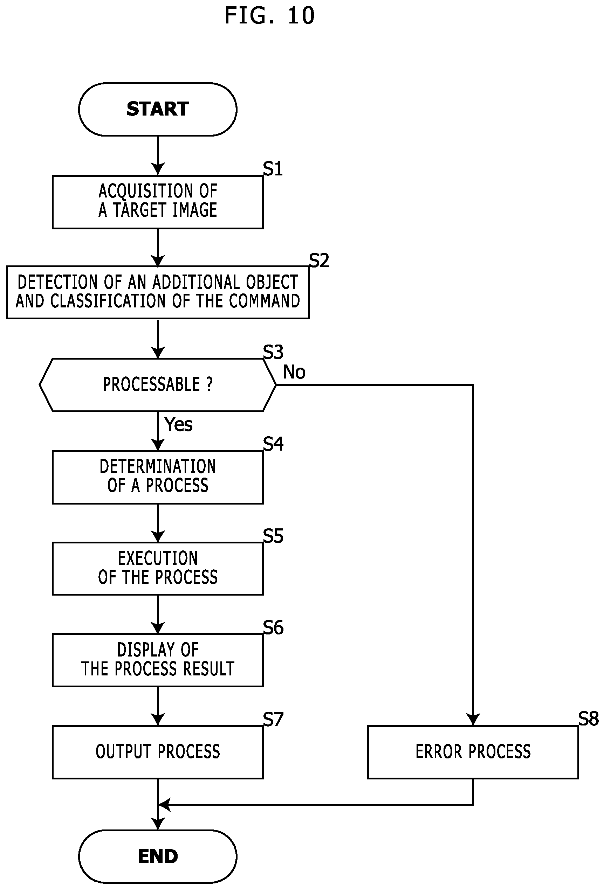

The following part explains a behavior of the image processing apparatus in Fig. 1. Fig. 10 shows a flowchart that explains a behavior of the image processing apparatus shown in Fig. 1.

When the target image acquiring unit 11 acquires a document image (an additionally-written command, an ROI command and the like have been described) (in Step S1), the additional object detecting unit 12 detects additional objects additionally described on the aforementioned document (in Step S2) and determines an additionally-written command and ROI commands from the detected additional objects. At that time, the aforementioned editing screen may be displayed and the detection result and the classification result of the additionally-written command and the ROI commands may be set to be editable by a user.

The additional object detecting unit 12 determines a process target area on the basis of the ROI commands, and tries to classify the additional object to an additionally-written command and determines whether an additionally-written command is determined or not (i.e. whether a process specified by an additionally-written command can be executed or not) (in Step S3).

If an additionally-written command is determined, the process type determining unit 13 determines a process type and a process corresponding to the additionally-written command (in Step S4), and the process executing unit 14 executes the process of the process type corresponding to the additionally-written command for the process target area determined on the basis of the detected additional objects as mentioned (in Step S5).

Further, the process executing unit 14 displays the process result on the display device 4 (in Step S6) and performs an output process (printing, data transmission, data saving and/or the like) of the processed document image and/or the generated data (in Step S7).

Contrarily, if in Step S3 the detection of the additional objects or the determination of the additionally-written command is failed, the error processing unit 16 performs error analysis and displays a cause, an error type and/or the like of the error (in Step S8).

As mentioned, in the aforementioned Embodiment 1, the target image acquiring unit 11 acquires a document image of a document. The additional object detecting unit 12 (a) detects additional objects additionally described to the document, (b) determines an additionally-written command and a process-target-area specifying command included in the detected additional objects, and (c) determines the process-target-area specifying command corresponding to the additionally-written command. The process type determining unit 13 determines a process type corresponding to the determined additionally-written command among predetermined plural process types. The process executing unit 14 uses this image processing apparatus or an external server and thereby executes a process of the process type corresponding to the determined additionally-written command for a process target area specified by the process-target-area specifying command corresponding to the additionally-written command.

Consequently, a user can cause to execute a desired process for a desired part in a document by an intuitive operation even though information on a process is not included when the document is generated as a process target.

### Embodiment 2.

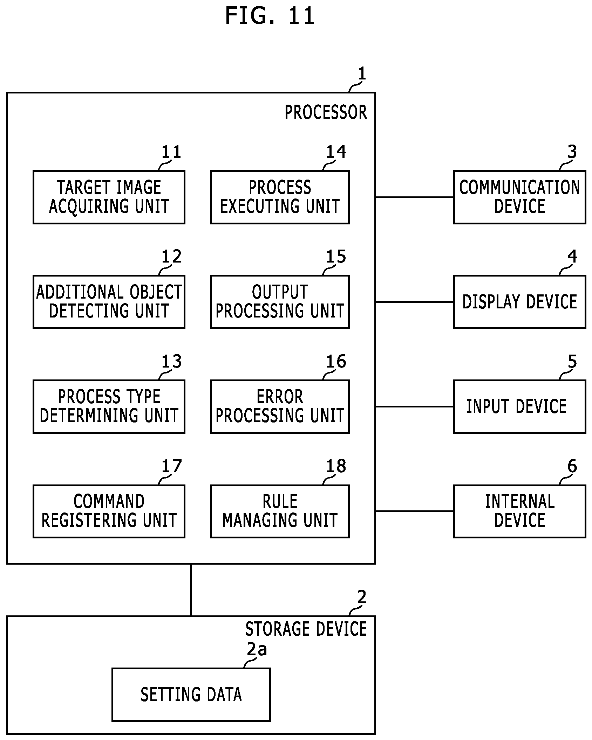

Fig. 11 shows a block diagram that indicates a configuration of an image processing apparatus according to Embodiment 2 of the present invention. In Embodiment 2, the processor 1 acts as the target image acquiring unit 11, the additional object detecting unit 12, the process type determining unit 13, the process executing unit 14, the output processing unit 15, the error processing unit 16, the command registering unit 17, and a rule managing unit 18 as the aforementioned processing units.

The rule managing unit 18 (a) registers as a rule the aforementioned additionally-written command and the corresponding process target area, and (b) adds the additionally-written command and the process target area registered as the rule to another document image.

At that time, the rule managing unit 18 (a) registers positions of the aforementioned additionally-written command and the process target area, and (b) adds the additionally-written command and the process target area at the registered positions in another document image.

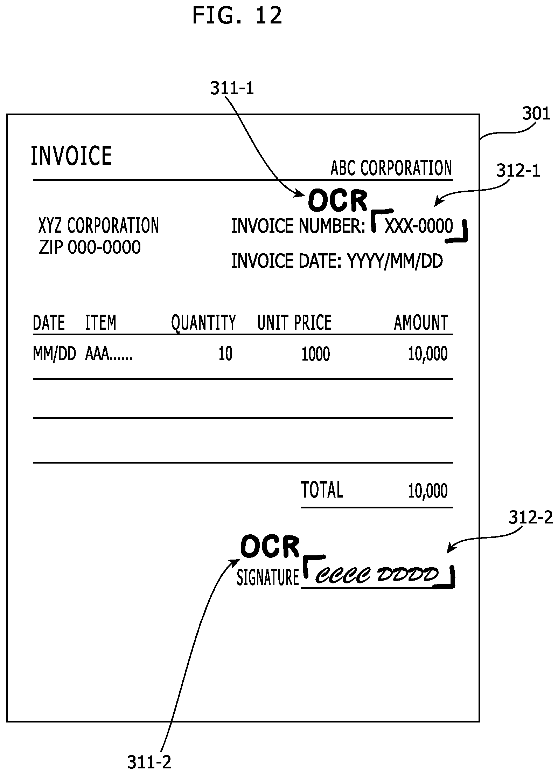

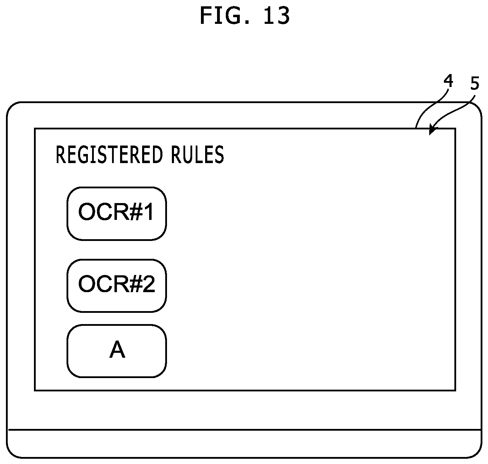

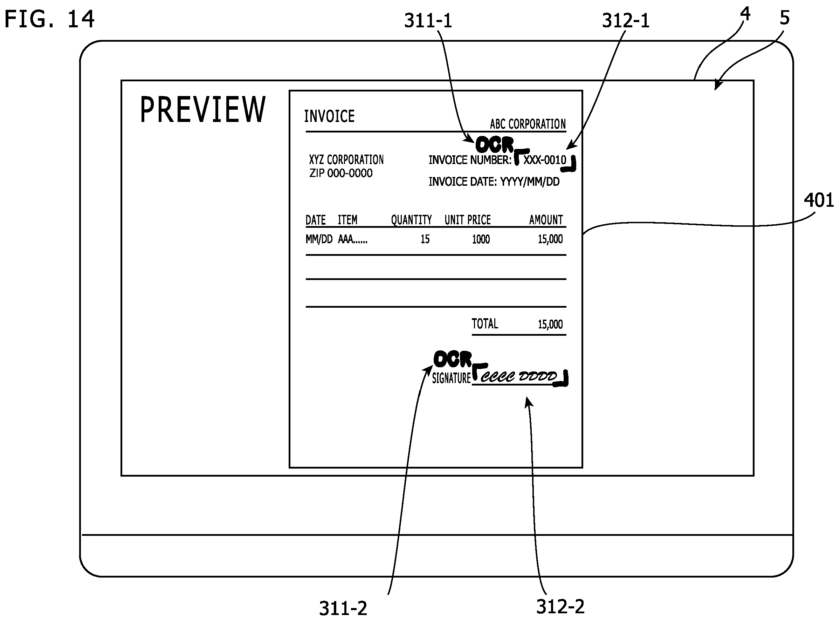

Fig. 12 shows a diagram that indicates an example of a document that an additionally-written command has been written. Fig. 13 shows a diagram that indicates a display example of a list of registered rules. Fig. 14 shows a diagram that indicates an example of preview display of another document image that additionally-written commands 311-1 and 311-2 and ROI commands 312-1 and 312-2 have been added on the basis of a rule.

As shown in Fig. 12 for example, acquired is a document image of a document 301 on which additionally-written commands 311-1 and 311-2 and ROI commands 312-1 and 312-2 have been added, and the additionally-written commands 311-1 and 311-2 and the ROI commands 312-1 and 312-2 (process target area) are detected and registered as a rule "OCR#1" in a list shown in Fig. 13, for example. Afterward, as shown in Fig. 14 for example, the rule "OCR#1" is applied to another document image 401 obtained from another document, and thereby the additionally-written commands 311-1 and 311-2 and the ROI commands 312-1 and 312-2 are added. At that time, in another document than the document 301, no additionally-written commands and no ROI commands are described, and in the document image 401 (another document image) scanned from this document, no additionally-written commands and no ROI commands are originally included.

In this embodiment, the rule managing unit 18 may (a) display on the predetermined display device 4 a list of the additionally-written commands registered as the rule as shown in Fig. 13, for example, (b) select an additionally-written command from the list in accordance with a user operation, and (c) add the selected additionally-written command and the corresponding process target area to another document image.

In this embodiment, the rule managing unit 18 may move the additionally-written command and the process target area to positions specified by a user operation in the aforementioned other document image 401.

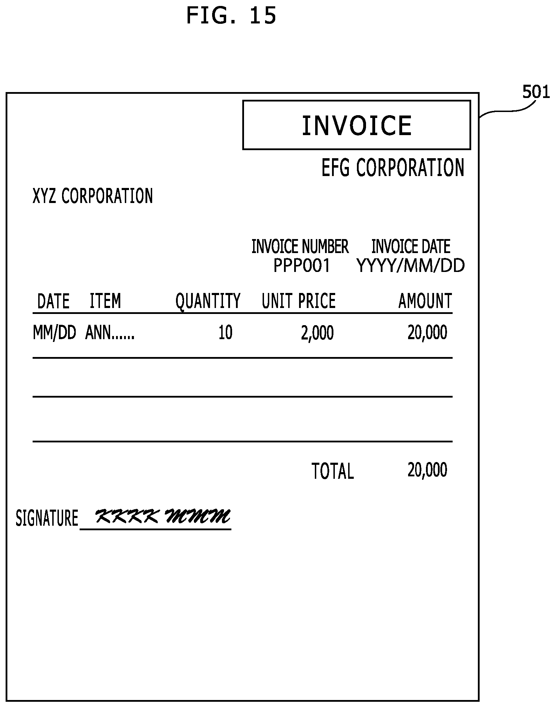

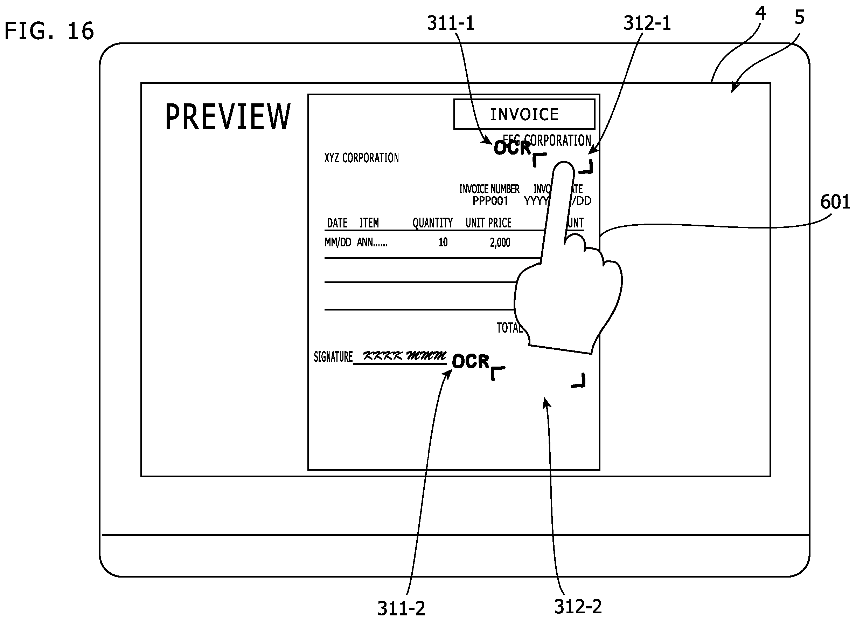

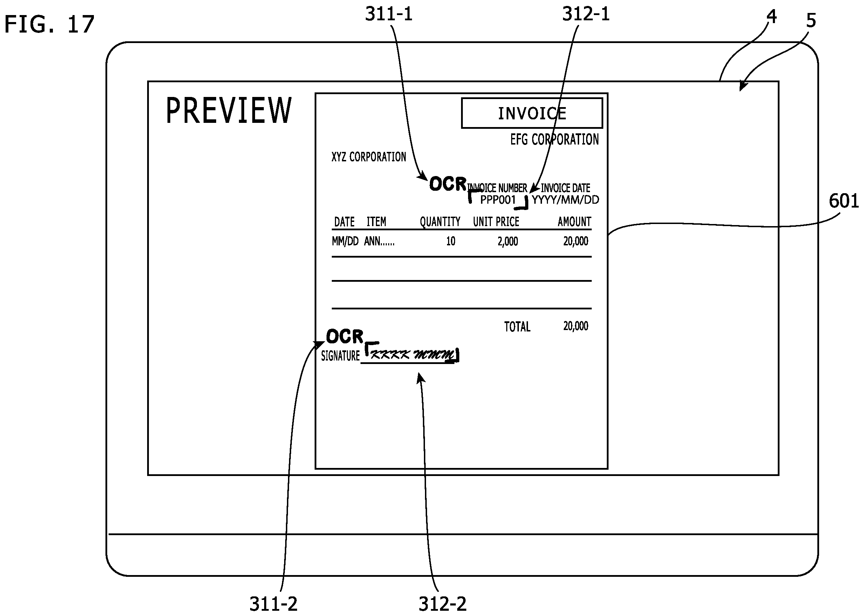

Fig. 15 shows a diagram that indicates an example of another document. Fig. 16 shows a diagram that indicates an example of preview display (initial status) of a document image of the document shown in Fig. 15. Fig. 17 shows a diagram that indicates an example of preview display (after editing) of a document image of the document shown in Fig. 15.

A document image of a document 501 is acquired on which no additionally-written commands and no ROIs are added as shown in Fig. 15 for example; and a document image 601 of it is displayed as shown in Fig. 16 for example, and further displayed such that a default rule or a rule specified by a user (here, the rule "OCR#1") is applied and the additionally-written commands 311-1 and 311-2 and the ROI commands 312-1 and 312-2 (process target area) in the rule are added.

If a format (layout) of a document image (a document) at rule registration and a format (layout) of this document image 601 (the document 501) are different, then as shown in Fig. 16 for example, the additionally-written commands 311-1 and 311-2 and the ROI commands 312-1 and 312-2 (process target area) may not be added to appropriate positions.

Therefore, for example, a user can drag and move a desired additionally-written command and desired ROI commands (process target area) (in Fig. 16, the additionally-written commands 311-1 and 311-2 and the ROI commands 312-1 and 312-2) to desired positions (for example, positions shown in Fig. 17). Thus, the rule managing unit 18 detects this dragging using the input device 5 and moves the additionally-written commands and the ROI commands to end positions of the dragging.

Further, while the rule managing unit 18 displays a document image that includes an additionally-written command and a process target area on the predetermined display device 4, the rule managing unit 18 registers the displayed additionally-written command and the displayed process target area as a rule.

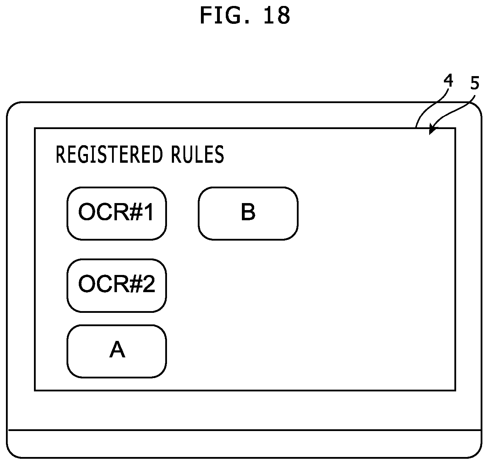

The rule managing unit 18 may register as a new rule the rule edited as mentioned in accordance with a user operation. Fig. 18 shows a diagram that indicates a display example of a list in which a new rule has been added. As shown in Fig. 18 for example, the additionally-written command and the process target area of which positions have been changed as shown in Figs. 16 and 17 may be registered as a new rule "B".

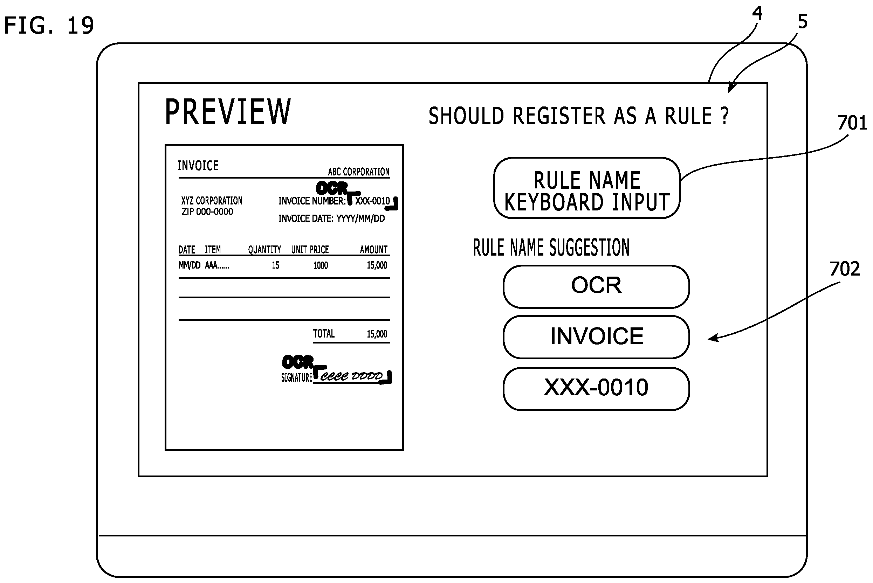

Fig. 19 shows a diagram that indicates an example of a rule registration screen. The rule managing unit 18 displays a rule registration screen as shown in Fig. 19 for example on the display device 4, and determines a name of a rule specified by a user. The rule registration screen shown in Fig. 19 includes a rule name input key 701 and a rule name suggestion list 702.

The rule name input key 701 is a soft key, and when the rule name input key 701 is pressed down, a dialog to which a rule name can be inputted is displayed, and a text inputted by keyboard inputting in the dialog is determined as a name of a rule to be registered.

Further, the rule name suggestion list 702 includes items of a name of the additionally-written command ("OCR" in Fig. 19), a text obtained by an OCR process for the process target area ("XXX-0010" in Fig. 19), a text obtained by an OCR process for the document image ("INVOICE" in Fig. 19) and the like; each of the items is displayed as a soft key; and the pressed-down item is determined as a name of a rule to be registered.

At that time, the rule managing unit 18 may edit the displayed additionally-written command and the displayed process target area in accordance with a user operation and may register the edited additionally-written command and the edited process target area as a rule. Here, a command type of the additionally-written command and positions of the additionally-written command and the process target area as mentioned can be edited. Further, the rule managing unit 18 may delete the additionally-written command and the process target area specified by a user operation.

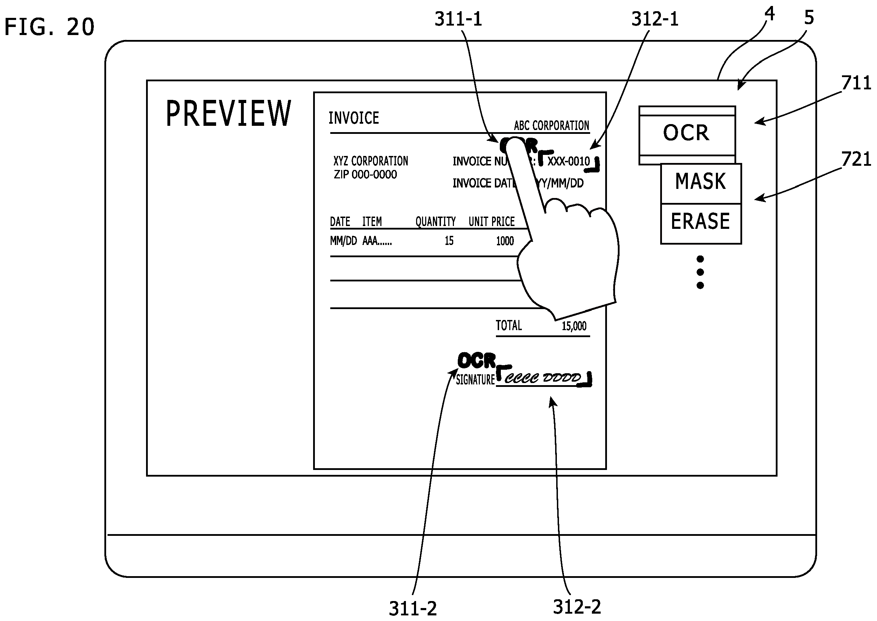

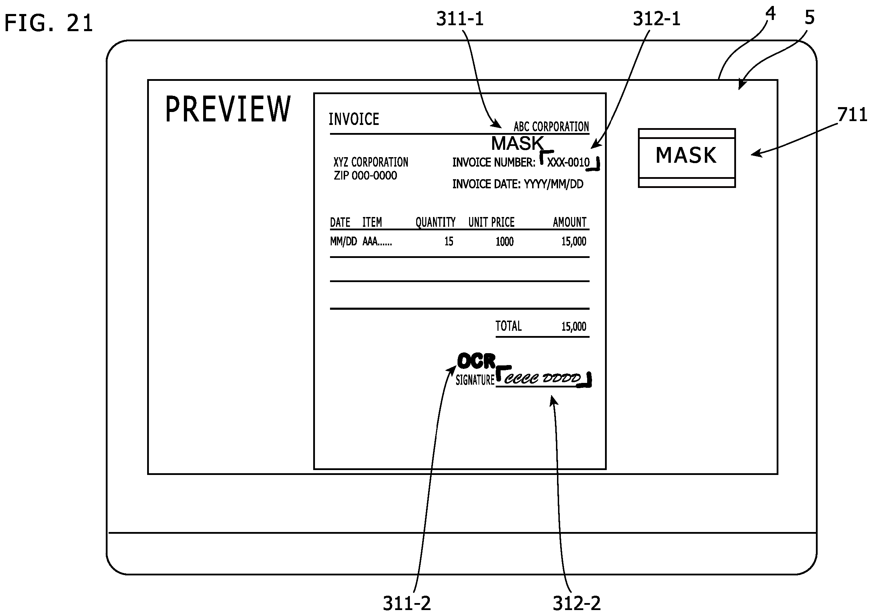

Fig. 20 shows a diagram that indicates an example of an additionally-written-command suggestion list. Fig. 21 shows a diagram that indicates an example of preview display (after changing an additionally-written command) of a document image of the document shown in Fig. 12.

As shown in Fig. 20 for example, the rule managing unit 18 displays a command name 711 of an additionally-written command specified by a user operation among the displayed additionally-written commands and displays an additionally-written-command suggestion list 721. Here, in the additionally-written-command suggestion list 721, additionally-written commands "MASK" and "ERASE" are included. Further, the rule managing unit 18 changes the additionally-written command in the document image to an additionally-written command selected from the additionally-written-command suggestion list 721 by a user operation as shown in Fig. 21, for example. In Fig. 21, the additionally-written command is changed from "OCR" to "MASK".

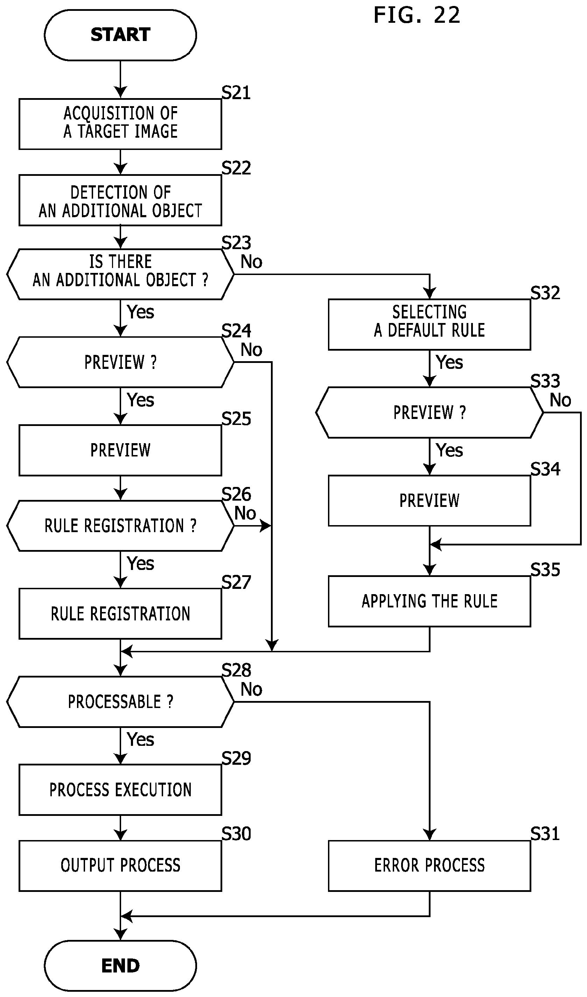

The following part explains a behavior of the image processing apparatus in Embodiment 2. Fig. 22 shows a flow chart that explains a behavior of the image processing apparatus in Embodiment 2.

When the target image acquiring unit 11 acquires a document image (in Step S21), the additional object detecting unit 12 tries to detect additional objects additionally described to the aforementioned document (in Step S22).

The rule managing unit 18 determines whether there is an additional object or not (in Step S23), and if there is an additional object, determines whether preview display of the document image should be performed or not in accordance with a predetermined setting (in Step S24). If the rule managing unit 18 determines that preview display of the document image should be performed, the rule managing unit 18 performs preview display of the document image as shown in Figs. 14, 16 and 20, for example (in Step S25).

Here, change of the additionally-written command as shown in Fig. 20 for example, and change of positions of the additionally-written command and the ROI commands (process target area) as shown in Figs, 16 and 17 for example can be performed.

Subsequently, the rule managing unit 18 determines whether this additionally-written command and the ROI commands should be registered as a rule or not in accordance with a user operation to the input device 5 (in Step S26). If it is determined that this additionally-written command and the ROI commands should be registered, then the rule managing unit 18 registers this additionally-written command and the ROI commands as a rule (in Step S27). This rule is included in the setting data 2a.

Afterward, the process type determining unit 13 determines the process target area and tries to classify the additional objects into an additionally-written command, and determines whether an additionally-written command is determined or not (i.e. whether a process specified by the additionally-written command can be executed or not) (in Step S28).

If an additionally-written command is determined, the process type determining unit 13 determines a process and a process type corresponding to the additionally-written command, the process executing unit 14 executes a process of the process type corresponding to the additionally-written command for a process target area determined on the basis of the detected additional objects as mentioned, and displays the process result on the display device 4 (in Step S29). Subsequently, the process executing unit 14 performs an output process (printing, data transmission, data saving or the like) of the processed document image or generated data (in Step S30).

Contrarily, if in Step S28 the detection of the additional objects or the determination of the additionally-written command is failed, the error processing unit 16 performs error analysis and displays a cause, an error type and/or the like of the error (in Step S31).

Meanwhile, if in Step S23 it is determined that there are no additional objects in the acquired document image, then the rule managing unit 18 selects a default rule from the registered rules and adds an additionally-written command and ROI commands of the rule at positions specified by the rule in the document image (in Step S32). The default rule may be a rule recently used or may be a rule specified in advance.

Subsequently, the rule managing unit 18 determines whether preview display of the document image should be performed or not in accordance with a predetermined setting (in Step S33). If the rule managing unit 18 determines that preview display of the document image should be performed, then the rule managing unit 18 performs preview display of the document image as shown in Figs. 14, 16 and 20, for example (in Step S34).

Here, change of the additionally-written command as shown in Fig. 20 for example, and change of positions of the additionally-written command and the ROI commands (process target area) as shown in Figs, 16 and 17 for example can be performed.

Subsequently, the rule managing unit 18 applies the currently displayed additionally-written command and the currently displayed ROI commands in accordance with a user operation to the input device 5 (in Step S35).

Afterward, the process type determining unit 13 determines the process target area and tries to classify the additional objects into an additionally-written command, and determines whether an additionally-written command is determined or not (in Step S28). Subsequently, subsequent processes to Step S28 are performed as well.

Other parts of the configuration and behaviors of the image processing apparatus in Embodiment 2 are identical to those in any of the other embodiments.

As mentioned, in the aforementioned Embodiment 2, the target image acquiring unit 11 acquires a document image of a document. The additional object detecting unit 12 detects additional objects additionally described to the document. The process type determining unit 13 determines a process type corresponding to an additionally-written command included in the detected additional objects among predetermined plural process types. The process executing unit 14 uses this image processing apparatus or an external server and thereby executes a process of the determined process type for a process target area determined on the basis of the detected additional objects. Further, the rule managing unit 18 (a) registers as a rule the additionally-written command and the process target area, and (b) adds the additionally-written command and the process target area registered as the rule to another document image.

Consequently, a user is not required to additionally write same commands to plural pages and therefore, the user can easily cause to execute same processes for each of the plural pages of document images.

### Embodiment 3.

In Embodiment 3, the additional object detecting unit 12 classifies the detected additional objects into the additionally-written command and the process-target-area specifying command by object detection using a learner that machine learning has been performed. Here, the additionally-written command is image information rather than character information, and image information of at least one of character, symbol and figure. Further, the process-target-area specifying commands are also image information, and are image information of at least one of character, symbol and figure.

This learner is a deep-learning neural network built in this image processing apparatus or the like, and for example, machine learning has been performed for the learner in accordance with an existing machine learning method such that additional objects of each document image are used as input data and classification (command IDs) of additionally-written commands and ROI commands are used as output data.

Thus, for extracting the additionally-written command, an OCR (Optical Character Recognition) process is not executed for the additional objects detected by the additional object detecting unit 12, and the additional objects are directly classified into the additionally-written command on the basis of image information (image characteristic amount) of the additional objects.

Further, the process-target-area specifying command includes a pair of a first command (ROI command 112a) and a second command (ROI command 112b) different from each other, as shown in Fig. 2, for example. The process target area is a bounding box of the first command (ROI command 112a) and the second command (ROI command 112b) as a pair. Here, the first command (ROI command 112a) is an opening bracket and the second command (ROI command 112b) is a closing bracket.

In the detection of the aforementioned additional objects, bounding boxes (circumscribed rectangles) 121, 122a and 122b of the additional objects are detected as shown in Fig. 3, for example; and in the determination of the aforementioned process type, an additional object that has a specific image characteristic is recognized as the additionally-written command 111, and additional objects that have specific image characteristics are recognized as the ROI commands 112a and 112b (a pair of an image that indicates a top left corner of a process target area and an image that indicates a bottom right corner of the process target area).

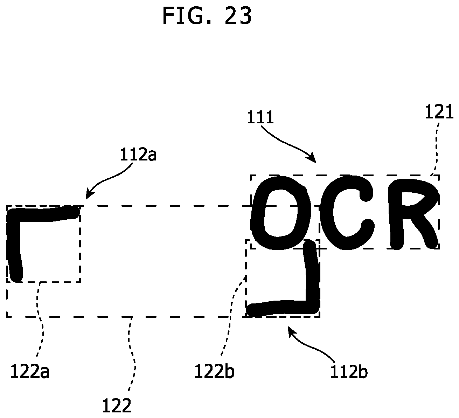

Fig. 23 shows a diagram that explains association between a detected additionally-written command and a detected ROI command. Further, as shown in Figs. 3 and 23 for example, the bounding box 122 of the ROI commands 112a and 112b is set as a process target area, and the additionally-written command 111 and the process target area are associated with each other on the basis of a distance D between a centroid position of the bounding box 122 (process target area) and a centroid position of the bounding box 121 of the additionally-written command 111. Therefore, a process specified by the additionally-written command 111 is executed for this process target area. For example, if the distance D is equal to or less than a predetermined value, then the additionally-written command 111 and the process target area may be associated with each other. If there are plural process target areas and plural additionally-written commands, regarding an additionally-written command, a process target area (process-target-area specifying commands) that has the shortest distance between a center position of this additionally-written command (a center position of a bounding box of this additionally-written command) and a center position of this process target area is determined as a process target area (process-target-area specifying commands) corresponding to this additionally-written command.

The machine learning has been performed for the learner with plural training data sets that are pairs of additional objects in training document images as input data and classes of additionally-written commands and process-target-area specifying commands among the additional objects as output data. Here, for example, the training document images in the plural training data sets include a training document image in which one of the additionally-written command and the process-target-area specifying command is partially overlapped with the other. Further, for example, the training document images in the plural training data sets include a training document image in which one of a (virtual) bounding box of the additionally-written command and a (virtual) bounding box of the process-target-area specifying command is partially overlapped with the other.

Using such training data sets, as shown in Fig. 23 for example, even if an additionally-written command 111 and an ROI command 112b are close to each other, the additionally-written command 111 and the ROI command 112b are individually determined separately from each other.

Further, the additionally-written command is recognized using object detection, and therefore, even if there is a small error such as misspelling when a user writes the additionally-written command to a document, for example, it tends to be recognized as the additionally-written command intended by the user without referring to a dictionary or the like, and the additionally-written command intended by the user is recognized quickly and correctly.

Further, the process type determining unit 13 determines a process type corresponding to the determined additionally-written command among predetermined plural process types. For example, in advance, a process ID that indicates a process type is associated with a command ID of an additionally-written command and is registered, the process type determining unit 13 determines a process type of a process ID corresponding to a command ID of the detected additionally-written command, as a process type corresponding to the additionally-written command.

In this embodiment, plural process types that can be specified by plural additionally-written commands different from each other are set in the setting data 2a. As the plural process types, there are image insertion, character information extraction, data structuring, image generation and the like as mentioned.

For example, in the process type "image insertion" corresponding to the additionally-written command "ERASE", executed is a process to overwrite a process target area with a background color (i.e. deletion of an object in a process target area). For example, in the process type "image insertion" corresponding to the additionally-written command "MASK", executed is a process to overwrite a process target area with a specific color (black or the like) (i.e. mask process). For example, in the process type "image insertion" corresponding to the additionally-written command "STAMP", executed is a process to fit to a process target area a specific image (image of a stamp) specified in advance for the process target area.

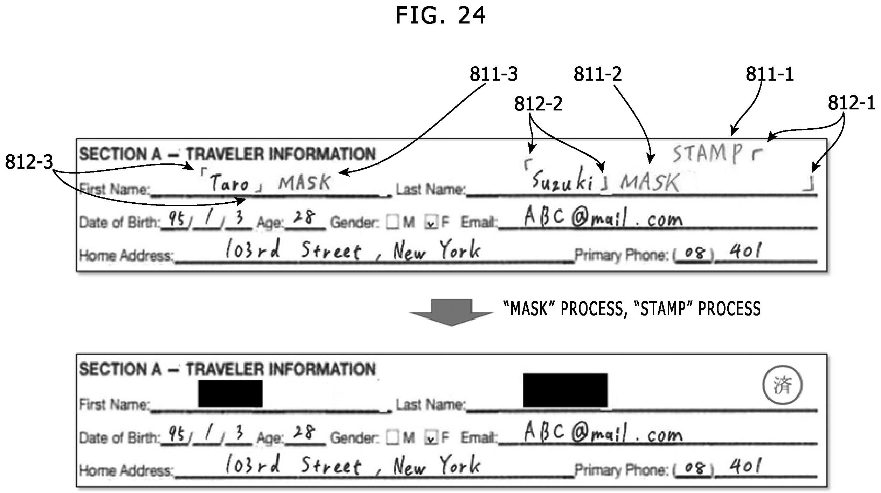

Fig. 24 shows a diagram that explains an example of a case that plural process target areas are specified together with plural additionally-written commands. As shown in Fig. 24 for example, plural process target areas may be specified to plural additionally-written commands 811-1 to 811-3 by plural pairs of ROI commands 812-1 to 812-3. The ROI commands 812-1 nearest to the additionally-written command 811-1 among the ROI commands 812-1 to 812-3 are associated with the additionally-written command 811-1, the ROI commands 812-2 nearest to the additionally-written command 811-2 among the ROI commands 812-1 to 812-3 are associated with the additionally-written command 811-2, and the ROI commands 812-3 nearest to the additionally-written command 811-3 among the ROI commands 812-1 to 812-3 are associated with the additionally-written command 811-3. In a case of Fig. 24, a process of the additionally-written command "STAMP" is executed for a process target area specified by the ROI commands 812-1, and a process of the additionally-written command "MASK" is executed for process target areas specified by the ROI commands 812-2 and 812-3.

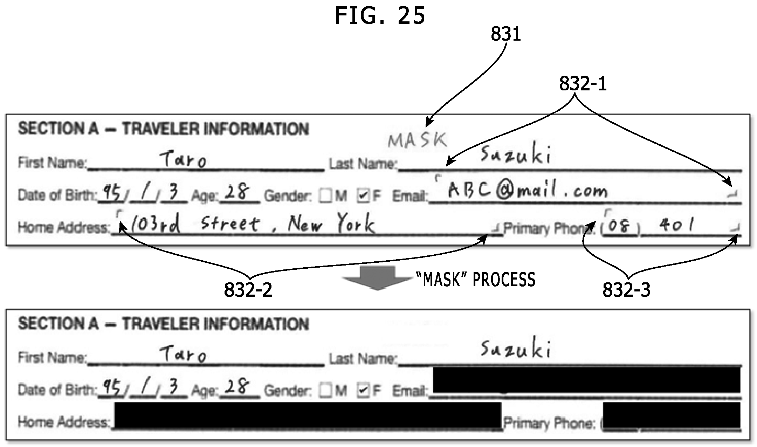

Fig. 25 shows a diagram that explains an example of a case that plural process target areas are specified together with a single additionally-written command. As shown in Fig. 25 for example, plural process target areas may be specified to a single additionally-written command 831 by plural pairs of ROI commands 832-1 to 832-3. Specifically, if there are no other additionally-written commands at shorter distances than a distance to the additionally-written command 831 from plural process target areas specified by plural pairs of the ROI commands 832-1 to 832-3, then the plural pairs of the ROI commands 832-1 to 832-3 are associated with this single additionally-written command 831. In a case of Fig. 25, a process of the additionally-written command "MASK" is executed for three process target areas specified by the ROI commands 832-1 to 832-3.

Furthermore, for example, in the process type "character information extraction" corresponding to the additionally-written command "FILENAME", executed is a process to set as a file name character information (text data) obtained in an OCR process for an image of a process target area and save image data of a document with the file name. Furthermore, a process of the process type TAG is a process to generate a string (character information) included in a process target area using an OCR process and set the character information as a searching tag when a document image is data in a PDF format.

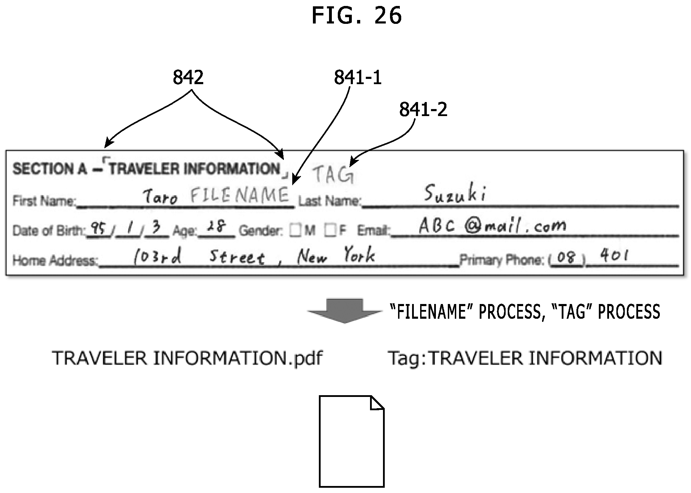

Fig. 26 shows a diagram that explains an example of a case that plural additionally-written commands are specified to a single process target area (a pair of process-target-area specifying commands). As shown in Fig. 26 for example, a single process target area may be specified to plural additionally-written commands 841-1 and 841-2 by a single pair of ROI commands 842. Specifically, if there are no other process target areas at shorter distances than a distance to the process target area specified by the ROI command 842 from the plural additionally-written commands 841-1 and 841-2, then the single pair of the ROI commands 842 (the single process target area) is associated with the plural additionally-written commands 841-1 and 841-2. In a case of Fig. 26, a process of the additionally-written command "FILENAME" and a process of the additionally-written command "TAG" are executed for the single process target area specified by the ROI command 842. Specifically, a text "TRAVELERINFORMATION" is obtained by an OCR process for the process target area, a file of this document image is generated with a file name "TRAVELERINFORMATION. pdf", and a tag "TRAVELERINFORMATION" as property information is included into the file.

Further, the process executing unit 14 uses this image processing apparatus or an external server and thereby executes a process of the process type corresponding to the determined additionally-written command (command ID) for a process target area specified by the process-target-area specifying command corresponding to this additionally-written command.

At that time, the process executing unit 14 (a) deletes the additionally-written command from the document image, and (B) determines the process target area on the basis of the process-target-area specifying command in the document image after the additionally-written command is deleted. Consequently, even if the additionally-written command is close to the process-target-area specifying command, the process-target-area specifying command is determined without affection from the additionally-written command and therefore, the process target area is correctly determined.

Further, when a specific additionally-written command is used, an argument command can be attached. Here, the argument commands are written on the document with the ROI commands, and are numbers that specify a processing order of plural pairs of the ROI commands (plural process target areas). The argument commands are converted from image information to numerical values by an OCR process. The additional object detecting unit 12 (a) determines the argument commands with the additionally-written command and the process-target-area specifying commands included in the detected additional objects by the aforementioned object detection, and (b) determines the process-target-area specifying commands corresponding to the additionally-written command and determines the argument commands corresponding to the process-target-area specifying commands. Further, the process executing unit 14 executes a process corresponding to the additionally-written command for the process target areas specified by the process-target-area specifying commands in the order specified by the determined argument commands.

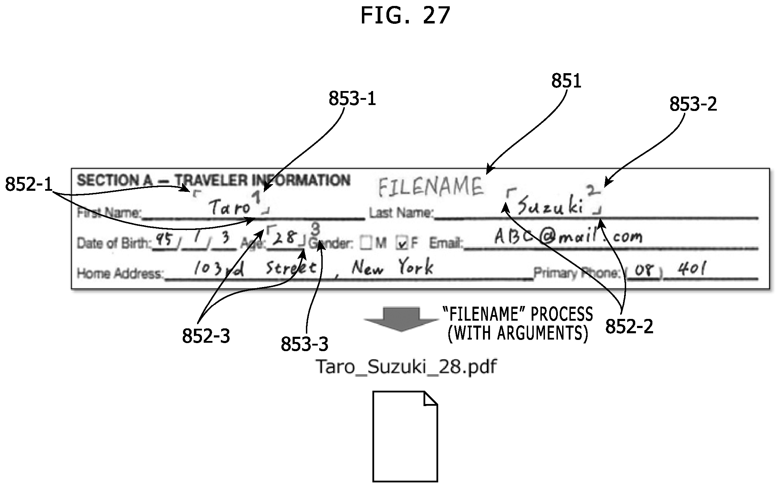

Fig. 27 shows a diagram that indicates examples of an argument command. In a case of Fig. 27, there are plural pairs of process-target-area specifying commands 852-1 to 852-3 (plural process target areas) for an additionally-written command 851 ("FILENAME"), and further, an argument command 853-1, 853-2 or 853-3 is written to each pair of the process-target-area specifying command 852-i (each process target area). In this case, a processing order is specified by the argument commands 853-1 to 853-3 as an order of a process target area of the process-target-area specifying command 852-1, a process target area of the process-target-area specifying command 852-2, a process target area of the process-target-area specifying command 852-3 (here, in an ascending order of the numerical values). Specifically, a text "Taro" is obtained by an OCR process for the process target area of the process-target-area specifying command 852-1, a text "Suzuki" is obtained by an OCR process for the process target area of the process-target-area specifying command 852-2, and a text "28" is obtained by an OCR process for the process target area of the process-target-area specifying command 852-3; and a file name "Taro_Suzuki_28.pdf" is generated by concatenating "Taro", "Suzuki" and "28". Here, the delimiter "_" is used, but another delimiter may be available or a delimiter may not be applied.

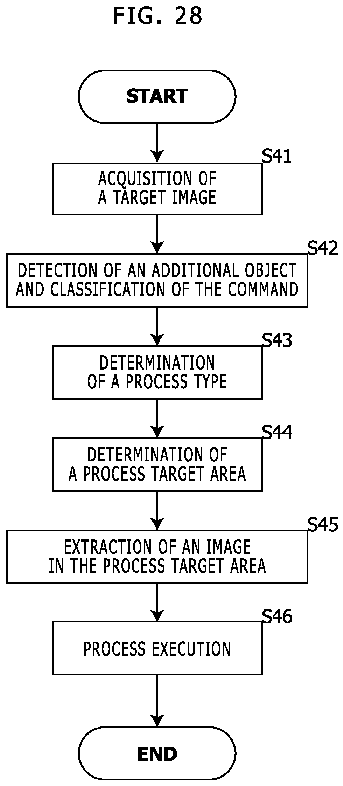

The following part explains a behavior of the image processing apparatus in Embodiment 3. Fig. 28 shows a flow chart that explains a behavior of the image processing apparatus in Embodiment 3.

When the target image acquiring unit 11 acquires a document image (an additionally-written command, an ROI command and the like have been described) (in Step S41), the additional object detecting unit 12 detects additional objects additionally described on the aforementioned document (in Step S42) and determines an additionally-written command and ROI commands from the detected additional objects by object detection as mentioned. When the additionally-written command is determined, the process type determining unit 13 determines a process type and a process corresponding to the additionally-written command (in Step S43).

Subsequently, after deleting the additionally-written command, the process executing unit 14 determines a process target area (a position and a size of it) specified by the ROI command (in Step S44), extracts an image of the determined process target area from the document image (in Step S45), and executes the determined process for the document image (in Step S46). After finishing the process, the process executing unit 14 performs displaying the process result on the display device 4 and performs an output process (printing, data transmission, data saving or the like) of the processed document image or generated data.

Other parts of the configuration and behaviors of the image processing apparatus in Embodiment 3 are identical to those in any of the other embodiments.

As mentioned, in the aforementioned Embodiment 3, the target image acquiring unit 11 acquires a document image of a document. The additional object detecting unit 12 (a) detects additional objects additionally described to the document, (b) determines an additionally-written command and a process-target-area specifying command included in the detected additional objects, and (c) determines the process-target-area specifying command corresponding to the additionally-written command. The process type determining unit 13 determines a process type corresponding to the determined additionally-written command among predetermined plural process types. The process executing unit 14 uses this image processing apparatus or an external server and thereby executes a process of the process type corresponding to the determined additionally-written command for a process target area specified by the process-target-area specifying command corresponding to the additionally-written command. Further, the additional object detecting unit 12 classifies the detected additional objects into the additionally-written command and the process-target-area specifying command by object detection using a learner that machine learning has been performed.

Consequently, in a document image, even if a process-target-area specifying command that specifies a process target area and an additionally-written command that specifies a process for the process target area are close to each other, each of the process-target-area specifying command and the additionally-written command is properly detected.

### Embodiment 4.

In Embodiment 4, the aforementioned plural process types include a structured data generation process. The structured data generation process is a process to generate structured data from an image of the aforementioned process target area. In this embodiment, as additionally-written commands corresponding to the structured data generation process, there are an additionally-written command "TABLE" and an additionally-written command "CSV".

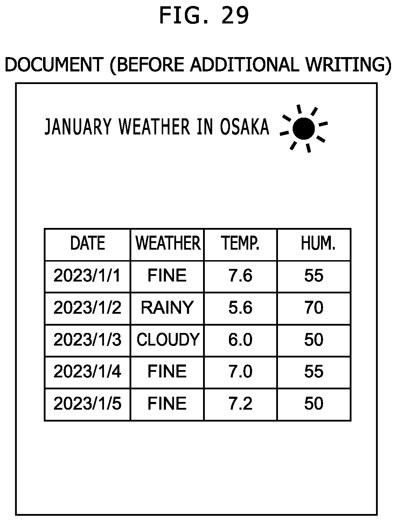

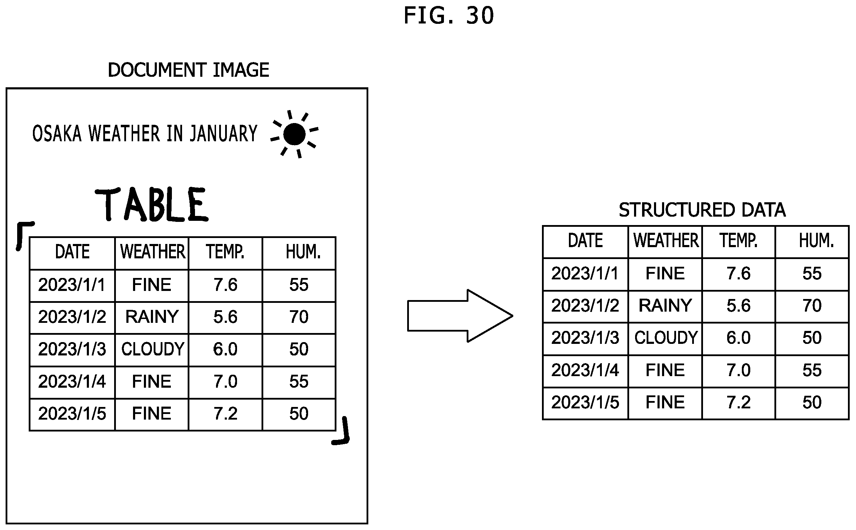

Fig. 29 shows a diagram that indicates an example of a document image. Fig. 30 shows a diagram that indicates an example of a structured data generation process corresponding to the additionally-written command "TABLE". For example, in the structured data generation process corresponding to the additionally-written command "TABLE", executed is a process to perform extraction of a table for an image of the process target area and convert image data of the table into data in a table format such as CSV data appropriately using an OCR process or the like. The conversion from the image data of the table into data in a table format is performed in accordance with an existing method. For example, the additionally-written command "TABLE" and the ROI commands are written to a document shown in Fig. 29, and thereafter, image scanning of the document is performed and thereby, a document image shown in Fig. 30 is acquired. Subsequently, by the structured data generation process, data in a table format is obtained as structured data shown in Fig. 30 from the document image.

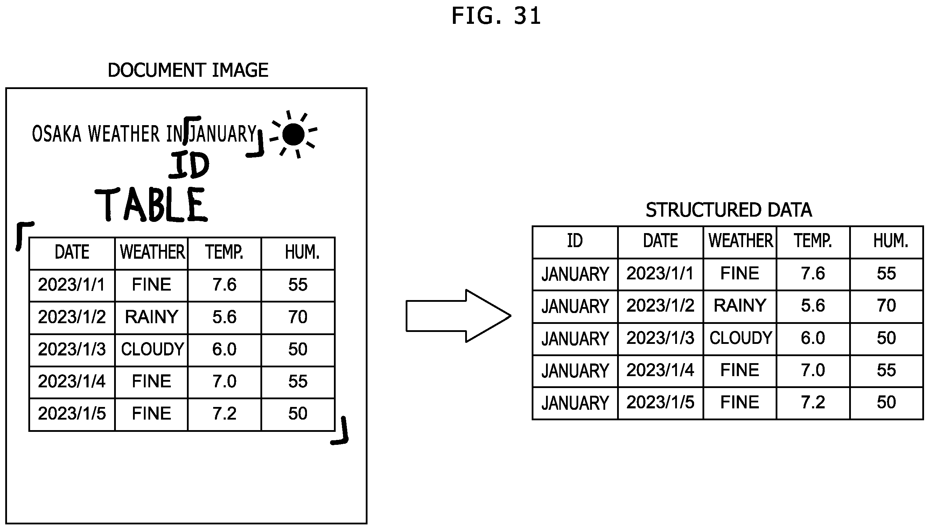

Fig. 31 shows a diagram that indicates an example of a data addition process. Further, the aforementioned plural process types include a data addition process. The data addition process is a process to generate data (text, numerical value or the like) from an image of a process target area by an OCR process and add the generated data to structured data generated by the structured data generation process (the aforementioned table data or the like). The additionally-written command corresponding to the data addition process is different from the additionally-written command corresponding to the structured data generation process. In this embodiment, there is an additionally-written command "ID" as the additionally-written command corresponding to the data addition process. For example, to a document shown in Fig. 29, the additionally-written command "TABLE" and the ROI commands are written, and further, the additionally-written command "ID" and the ROI commands are written, and thereafter, image scanning of the document is performed and thereby a document image shown in Fig. 31 is acquired. Subsequently, by the structured data generation process, data in a table format as the structured data shown in Fig. 31 is obtained from the document image. In this data in the table format, data corresponding to the additionally-written command "TABLE" and the ROI commands (here, a text "JANUARY") is added in each row in the data in the table format corresponding to the additionally-written command "TABLE" and the ROI commands (same as the data in the table formation shown in Fig. 30).

Further, for example, in the structured data generation process corresponding to the additionally-written command "CSV", executed is a process to execute an OCR process for images of plural process target areas corresponding to plural additionally-written commands "CSV" and generate CSV data from data (text, numerical value or the like) obtained by the OCR process.

Further, an argument command can be used with the additionally-written command corresponding to the structured data generation process. For example, the argument command is a single character (number, Greek letter or the like). A process corresponding to the argument command is set correspondingly to the additionally-written command used together.

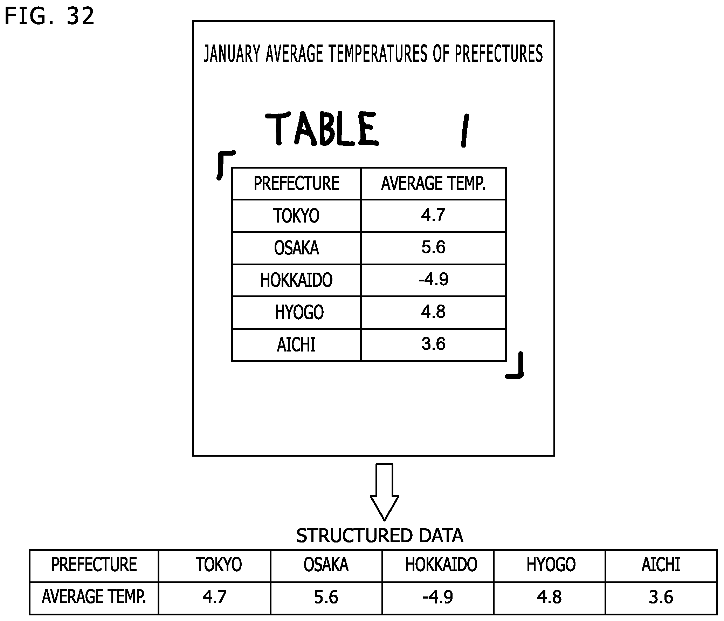

Fig. 32 shows a diagram that indicates an example of an argument command for the additionally-written command "TABLE". As shown in Fig. 32 for example, using (additionally writing) an argument command "1" to the additionally-written command "TABLE", rows and columns are exchanged in data in a table format.

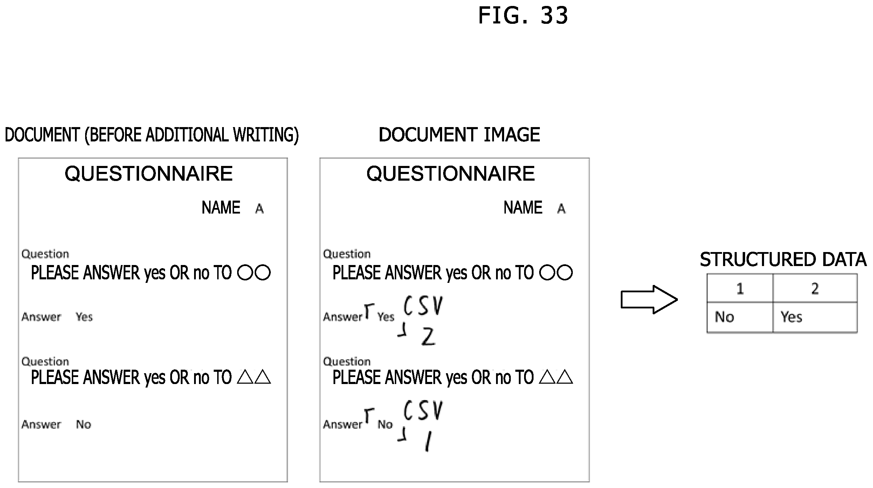

Fig. 33 shows a diagram that indicates an example of an argument command for the additionally-written command "CSV". Further, as shown in Fig. 33 for example, using (additionally writing) argument commands "1", "2", "3", ... to the additionally-written command "CSV", an order is specified. Specifically, as shown in Fig. 33 for example, in an order of data obtained correspondingly to the additionally-written command "CSV" attached the argument command "1", data obtained correspondingly to the additionally-written command "CSV" attached the argument command "2", CSV data that includes them is generated.

Further, the process executing unit 14 (a) may store the additionally-written command and the process-target-area specifying command determined for the document image and (b) apply the stored additionally-written command and the stored process-target-area specifying command to a document image subsequent to the document image. At that time, the structured data generation process generates single structured data from an image of the process target area in the document image and an image of the process target area in the subsequent document image.

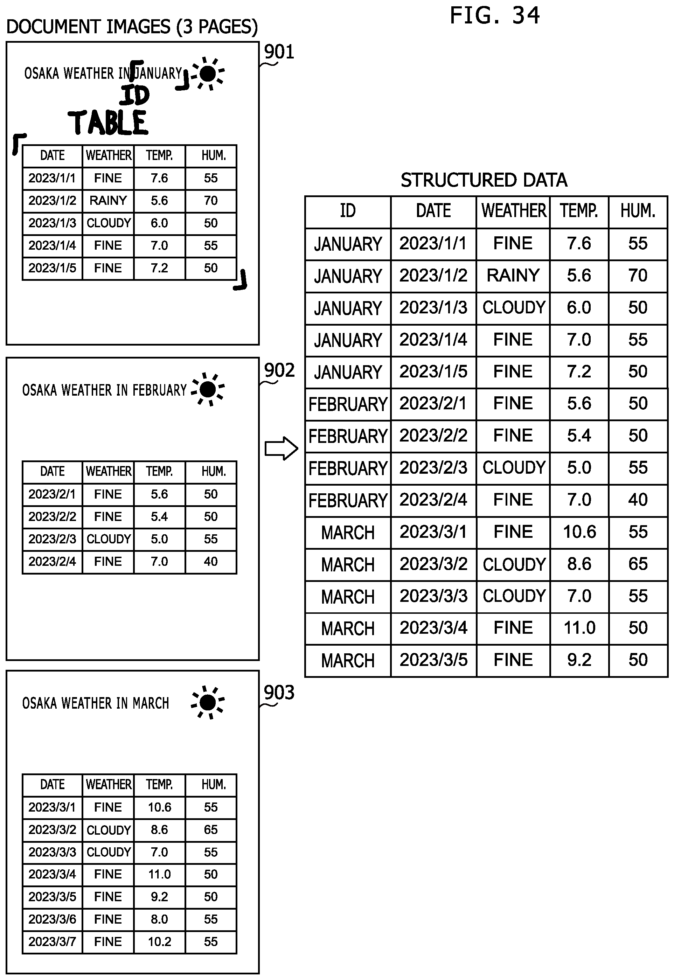

Fig. 34 shows a diagram that indicates an example of a process that generates a single piece of structured data from plural document images. In this case, the additionally-written command and the process target area are additionally written to the first document, but the additionally-written command and the process target area are not additionally written to the subsequent documents. Further, as shown in Fig. 34 for example, the additionally-written command and the process target area are determined from the first document image 901 acquired from the first document, and the additionally-written command and the process target area in the document image 901 are applied to subsequent document images 902 and 903 acquired from the subsequent documents. Further, pieces of structured data obtained from the subsequent document images 902 and 903 are concatenated to structured data obtained from the first document image 901 in turn.

Specifically, a process type corresponding to the additionally-written command "TABLE" in the first document image 901 is determined, and a position and a size of a process target area corresponding to the additionally-written command "TABLE" is determined. Similarly, a process type corresponding to the additionally-written command "ID" is determined, and a position and a size of a process target area corresponding to the additionally-written command "ID" is determined.

Subsequently, in the subsequent document images 902 and 903, for the process target area corresponding to the additionally-written command "TABLE" of the first document image 901, the process corresponding to the additionally-written command "TABLE" is executed; and for the process target area corresponding to the additionally-written command "ID" of the first document image 901, the process corresponding to the additionally-written command "ID" is executed.

Subsequently, to the structured data obtained from the first document image 901, the structured data obtained from the subsequent document image 902 is concatenated, and further, the structured data obtained from the subsequent document image 903 is concatenated.

It should be noted that in the subsequent document images 902 and 903, the corresponding process is executed for the process target area corresponding to the additionally-written command "TABLE", and therefore, as the document image 903 for example, if a table in the document image 903 is larger than the process target area corresponding to the additionally-written command "TABLE" of the first document image 901, then the process corresponding to the additionally-written command "TABLE" is executed for only a part of the table included in the process target area. Therefore, in a case of Fig. 34, from the table in the document image 903, data of the five rows are obtained, but data of the residual two rows is not obtained.

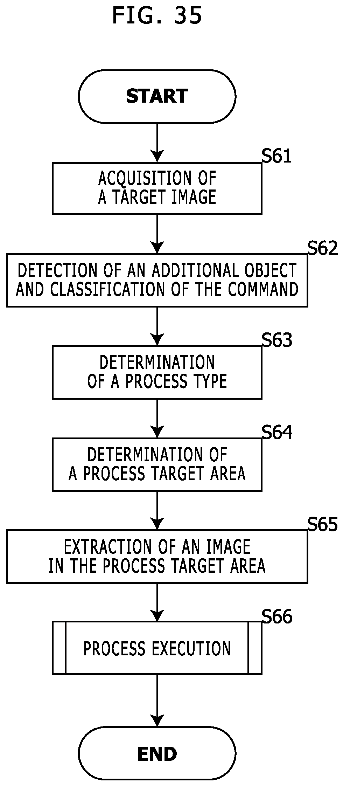

The following part explains a behavior of the image processing apparatus in Embodiment 4. Fig. 35 shows a flow chart that explains a behavior of the image processing apparatus in Embodiment 4.

When the target image acquiring unit 11 acquires a document image (an additionally-written command, an ROI command and the like have been described) (in Step S61), the additional object detecting unit 12 detects additional objects additionally described on the aforementioned document and determines an additionally-written command and an ROI command from the detected additional objects (in Step S62). When the additionally-written command is determined, the process type determining unit 13 determines a process type and a process to be executed corresponding to the additionally-written command (in Step S63).

Subsequently, for each of the determined additionally-written commands, the process executing unit 14 determines a process target area (a position and a size of it) specified by the ROI command (in Step S64), extracts an image of the determined process target area from the document image (in Step S65), and executes the determined process for the document image (in Step S66). After finishing the process, the process executing unit 14 performs displaying the process result on the display device 4 and performs an output process (printing, data transmission, data saving or the like) of the processed document image or generated data (the aforementioned structured data or the like).

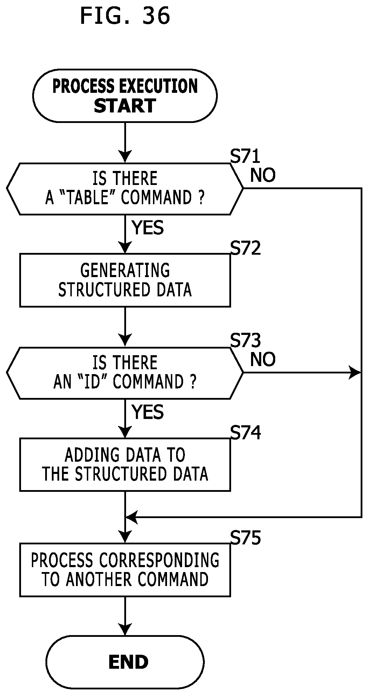

Here, details of the process execution in Step S66 are explained. Fig. 36 shows a flowchart that explains details of the process execution in Fig. 35.

The process executing unit 14 determines whether there is an additionally-written command "TABLE" or not among the additionally-written commands determined in the document image (in Step S71).

If there is an additionally-written command "TABLE", the process executing unit 14 generates structured data from an image of a process target area corresponding to the additionally-written command "TABLE" (in Step S72).

Subsequently, the process executing unit 14 determines whether there is an additionally-written command "ID" or not among the additionally-written commands determined in the document image (in Step S73).

If there is an additionally-written command "ID", the process executing unit 14 generates data from an image of a process target area corresponding to the additionally-written command "TABLE", and adds this data to the structured data generated in Step S72.

Afterward, if there is another additionally-written command determined in the document image, the process executing unit 14 executes a process corresponding to another additionally-written command (in Step S75).

As mentioned, on the basis of the additionally-written commands, a table in a document image is converted to structured data in a table format.

As mentioned, in the aforementioned Embodiment 4, the target image acquiring unit 11 acquires a document image of a document. The additional object detecting unit 12 (a) detects additional objects additionally described to the document, (b) determines an additionally-written command and a process-target-area specifying command included in the detected additional objects, and (c) determines the process-target-area specifying command corresponding to the additionally-written command. The process type determining unit 13 determines a process type corresponding to the determined additionally-written command among predetermined plural process types. The process executing unit 14 uses this image processing apparatus or an external server and thereby executes a process of the process type corresponding to the determined additionally-written command for a process target area specified by the process-target-area specifying command corresponding to the additionally-written command. Further, the aforementioned plural process types include a structured data generation process that generates structured data from an image of the process target area.

Consequently, a user can specify a process by writing an additionally-written command and therefore, a user can cause to generate structured data from a desired part in a document by an intuitive operation.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in the aforementioned Embodiment 2, it may be enabled to apply a rule to a document image that includes an additionally-written command and a process target area and thereby further add an additionally-written command and a process target area.

### Industrial applicability

For example, the present invention is applicable to an image processing apparatus that executes a user-desired process for a document image.

## Claims

1. An image processing apparatus, comprising:
a target image acquiring unit that acquires a document image of a document;
an additional object detecting unit that (a) detects additional objects additionally described to the document, (b) determines an additionally-written command and a process-target-area specifying command included in the detected additional objects, and (c) determines the process-target-area specifying command corresponding to the additionally-written command;
a process type determining unit that determines a process type corresponding to the determined additionally-written command among predetermined plural process types; and
a process executing unit that uses this image processing apparatus or an external server and thereby executes a process of the process type corresponding to the determined additionally-written command for a process target area specified by the process-target-area specifying command corresponding to the additionally-written command.

2. The image processing apparatus according to claim 1, wherein if plural process target areas are specified by the process-target-area commands, a process target area that has the shortest distance between a center position of the additionally-written command and a center position of this process target area is determined as a process target area corresponding to this additionally-written command.

3. The image processing apparatus according to claim 1, wherein the process-target-area specifying command includes a pair of a first command and a second command different from each other; and
the process target area is a bounding box of the first command and the second command as the pair.

4. The image processing apparatus according to claim 1, wherein the second command that exists in a specific angle range in a view from the first command is the second command that makes a pair with this first command.

5. The image processing apparatus according to claim 4, wherein when plural first commands and plural second commands are determined as the process-target-area specifying commands, if a single second command exists in a specific angle range in a view from the first command, then this second command is set as the second command that makes a pair with this first command.

6. The image processing apparatus according to claim 4, wherein when plural first commands and plural second commands are determined as the process-target-area specifying commands, if plural second commands exist in a specific angle range in a view from the first command, then among these second commands, a second command that has the shortest distance from the first command is the second command that makes a pair with this first command.

7. The image processing apparatus according to claim 1, wherein the additionally-written command is image information rather than character information and is image information of at least one of character, symbol and figure.

8. The image processing apparatus according to claim 1, wherein the additional object detecting unit (a) classifies the additional object into any of predetermined plural commands, (b) displays on a predetermined display device a detection result of the additional objects and a result of the classification , and (c) corrects the detection result and the result of the classification in accordance with a user operation to a predetermined input device.

9. The image processing apparatus according to claim 1, further comprising a rule managing unit that (a) registers as a rule the additionally-written command and the process target area, and (b) adds the additionally-written command and the process target area registered as the rule to another document image.

10. The image processing apparatus according to claim 9, wherein the rule managing unit (a) registers positions of the additionally-written command and the process target area, and (b) adds the additionally-written command and the process target area at the registered positions in the other document image.

11. The image processing apparatus according to claim 9, wherein the rule managing unit (a) displays on a predetermined display device the other document image in which the additionally-written command and the process target area have been added, and (b) moves the additionally-written command and the process target area to positions specified by a user operation in the other document image.

12. The image processing apparatus according to claim 9, wherein the rule managing unit (a) displays on a predetermined display device a list of the additionally-written commands registered as the rules, (b) selects an additionally-written command from the list in accordance with a user operation, and (c) adds the selected additionally-written command and a corresponding process target area to the other document image.

13. The image processing apparatus according to claim 9, wherein the rule managing unit (a) displays on a predetermined display device the document image that includes the additionally-written command and the process target area, and (b) registers the displayed additionally-written command and the displayed process target area as the rule.

14. The image processing apparatus according to claim 13, wherein the rule managing unit (a) displays on a predetermined display device the document image that includes the additionally-written command and the process target area, (b) edits the displayed additionally-written command and the displayed process target area in accordance with a user operation, and (c) registers the edited additionally-written command and the edited process target area as the rule.

15. The image processing apparatus according to claim 1, wherein the additional object detecting unit classifies the detected additional objects into the additionally-written command and the process-target-area specifying command by object detection using a learner that machine learning has been performed.

16. The image processing apparatus according to claim 15, wherein the machine learning has been performed for the learner with plural training data sets that are pairs of additional objects in training document images as input data and classes of additionally-written commands and process-target-area specifying commands among the additional objects as output data; and
the training document images in the plural training data sets include a training document image in which one of the additionally-written command and the process-target-area specifying command is partially overlapped with the other.

17. The image processing apparatus according to claim 15, wherein the machine learning has been performed for the learner with plural training data sets that are pairs of additional objects in training document images as input data and classes of additionally-written commands and process-target-area specifying commands among the additional objects as output data; and
the training document images in the plural training data sets include a training document image in which one of a bounding box of the additionally-written command and a bounding box of the process-target-area specifying command is partially overlapped with the other.

18. The image processing apparatus according to claim 15, wherein the process executing unit (a) deletes the additionally-written command from the document image, and (b) determines the process target area on the basis of the process-target-area specifying command in the document image after the additionally-written command is deleted.

19. The image processing apparatus according to claim 15, wherein the additional object detecting unit (a) determines the additionally-written command, the process-target-area specifying commands, and argument commands included in the detected additional objects, and (b) determines the process-target-area specifying commands corresponding to the additionally-written command and determines the argument commands corresponding to the process-target-area specifying commands; and
the process executing unit executes a process of the process type for the process target areas specified by the process-target-area specifying commands in an order specified by the argument commands.

20. The image processing apparatus according to claim 15, wherein if there are plural process target areas and plural additionally-written commands, a process target area that has the shortest distance between a center position of an additionally-written command and this process target area is determined as the process target area specified by the process-target-area specifying command corresponding to this additionally-written command.

21. The image processing apparatus according to claim 15, wherein the process-target-area specifying command includes a pair of a first command and a second command different from each other; and
the process target area is a bounding box of the first command and the second command as the pair.

22. The image processing apparatus according to claim 1, wherein the plural process types include a structured data generation process that generates structured data from an image of the process target area.

23. The image processing apparatus according to claim 22, wherein the plural process types include a data addition process that generates data from an image of the process target area and adds the generated data to the structured data generated by the structured data generation process; and
the additionally-written command corresponding to the data addition process is different from the additionally-written command corresponding to the structured data generation process.

24. The image processing apparatus according to claim 22, wherein the process executing unit (a) stores the additionally-written command and the process-target-area specifying command determined for the document image and (b) applies the stored additionally-written command and the stored process-target-area specifying command to a document image subsequent to the document image; and
the structured data generation process generates single structured data from an image of the process target area in the document image and an image of the process target area in the subsequent document image.

25. The image processing apparatus according to claim 22, wherein the additionally-written command corresponding to the structured data generation process is accompanied with an argument command; and
the process type corresponding to the argument command is a process that exchanges rows and columns in the structured data.

26. The image processing apparatus according to claim 22, wherein the additionally-written command corresponding to the structured data generation process is accompanied with an argument command; and
the process type corresponding to the argument command is a process that specifies a data order in the structured data.

27. The image processing apparatus according to claim 22, wherein the structured data is data in a table format.
